# EUROPEAN PATENT APPLICATION

(11) **EP 4 432 573 A1**
(43) Date of publication of application: **18.09.2024**
(21) Application number: 22914214.6
(22) Date of filing: 13.12.2022
(51) Int. Cl.: H04B 7/0456

(54) **INTERFERENCE AVOIDANCE METHOD, APPARATUS, AND SYSTEM**

(30) Priority: 31.12.2021 CN 202111669290
(71) Applicant: Huawei Technologies Co., Ltd., Shenzhen, Guangdong 518129 (CN)
(72) Inventor: GU, Xueqin, Shenzhen, Guangdong 518129 (CN); SHI, Lingling, Shenzhen, Guangdong 518129 (CN); SHEN, Peng, Shenzhen, Guangdong 518129 (CN); ZHANG, Yue, Shenzhen, Guangdong 518129 (CN)
(74) Representative: Pfenning, Meinig & Partner mbB
(86) International application number: PCT/CN2022/138593
(87) International publication number: WO 2023/124959

(57) **Abstract**

This application provides an interference avoidance method, an apparatus, and a system, and pertains to the field of communication technologies. In this application, based on an interference detection result, a parameter related to a beam coverage direction is dynamically transferred between a baseband unit and a radio frequency unit, to avoid interference in a space domain dimension. Because space domain resources of a radio air interface are fully used to avoid interference without sacrificing time domain resources and frequency domain resources of the radio air interface, impact of interference avoidance on service performance is mitigated, and service performance of a base station is improved. In addition, the radio frequency unit is supported in automatically adjusting the beam coverage direction. Therefore, problems of an excessively long delay, low efficiency, and a possible performance loss in a solution of manually adjusting a coverage direction are resolved to some extent, and the coverage direction can be adjusted more quickly and efficiently.

## Description

This application claims priority to Chinese Patent Application No. 202111669290.5, filed with the China National Intellectual Property Administration on December 31, 2021 and entitled "APPARATUS, SYSTEM, AND INTERFERENCE AVOIDANCE METHOD", which is incorporated herein by reference in its entirety.

### TECHNICAL FIELD

This application relates to the field of communication technologies, and in particular, to an interference avoidance method, an apparatus, and a system.

### BACKGROUND

During operation, a base station is often interfered by an external radio frequency signal. As a result, a service capability of a cell is severely degraded.

In a conventional technology, to avoid interference, a downlink sending slot of service data is reduced when the base station is interfered, or an uplink sending slot of service data is adjusted when the base station is interfered.

Using the foregoing method for interference avoidance greatly affects service performance.

### SUMMARY

Embodiments of this application provide an interference avoidance method, an apparatus, and a system, to help improve service performance of a base station. Technical solutions are described as follows:

According to a first aspect, an interference avoidance method is provided. The method includes: A baseband unit obtains a first parameter based on an interference detection result; the baseband unit generates a first message based on the first parameter, where the first message indicates a radio frequency unit to adjust a beam coverage direction based on the first parameter; and the baseband unit sends the first message to the radio frequency unit.

In the foregoing method, a parameter related to the beam coverage direction is dynamically transferred between the baseband unit and the radio frequency unit based on the interference detection result, to avoid interference in a space domain dimension. Because space domain resources of a radio air interface are fully used to avoid interference without sacrificing time domain resources and frequency domain resources of the radio air interface, impact of interference avoidance on service performance is mitigated, and service performance of a base station is improved. In addition, the radio frequency unit is supported in automatically adjusting the beam coverage direction. Therefore, problems of an excessively long delay, low efficiency, and a possible performance loss in a solution of manually adjusting a coverage direction are resolved to some extent, and the coverage direction can be adjusted more quickly and efficiently.

In a possible implementation, the first message includes first time information, and the first time information indicates a time point at which the first parameter starts to take effect.

In the foregoing implementation, because information related to parameter effective time is transferred between the baseband unit and the radio frequency unit, the radio frequency unit is supported in automatically starting to adjust the beam coverage direction at specified time, to meet requirements of many service scenarios that coverage direction adjustment occasions are needed.

In a possible implementation, the first time information includes a frame number and/or a subframe number from which the first parameter starts to take effect.

In a possible implementation, the first time information includes a slot number, a sub-slot number, or a mini-slot (mini-slot) number from which the first parameter starts to take effect.

In a possible implementation, the first time information includes a timestamp of a time point at which the first parameter starts to take effect.

In the foregoing implementation, because information such as a specific frame number, subframe number, and slot number that correspond to the parameter effective time is transferred between the baseband unit and the radio frequency unit, time for starting adjustment of the beam coverage direction is more precise.

In a possible implementation, the first message includes first duration information, and the first duration information indicates continuous effective duration of the first parameter.

In the foregoing implementation, because information related to parameter effective duration is transferred between the baseband unit and the radio frequency unit, the radio frequency unit is supported in automatically returning to a beam direction after specified duration, to automatically restore an original beam coverage direction.

In addition, the baseband unit does not need to be required to resend a message to indicate the radio frequency unit to return to a beam coverage direction. This reduces overheads of communication between the baseband unit and the radio frequency unit.

In a possible implementation, the first duration information includes at least one of the following: a quantity of continuous effective TTIs for the first parameter, a quantity of continuous effective slots for the first parameter, or a quantity of continuous effective radio frames for the first parameter.

In a possible implementation, the first duration information includes a quantity of continuous effective seconds, minutes, hours, or milliseconds for the first parameter.

In a possible implementation, the first duration information indicates a time point at which the first parameter ends to take effect. For example, the first duration information includes a frame number, a subframe number, a slot number, or a sub-slot number from which the first parameter ends to take effect. For another example, the first duration information includes a timestamp of the time point at which the first parameter ends to take effect.

In the foregoing implementation, the baseband unit and the radio frequency unit support transmission of the parameter effective duration in a plurality of information forms, to adapt to more application scenarios.

In a possible implementation, the first message is a CPRI message or an eCPRI message.

In the foregoing implementation, because a parameter of the beam coverage direction is transferred through a CPRI or an eCPRI, an existing communication mechanism in the CPRI or the eCPRI can be reused, and implementation complexity is reduced, to help smoothly evolve a live network.

In a possible implementation, the first parameter includes a downtilt angle, and the first message includes a value of the downtilt angle or a variation of the downtilt angle.

In a possible implementation, the first message includes an index of an interval of the value of the downtilt angle.

In a possible implementation, the first parameter includes a beamforming matrix, and the first message includes a value of the beamforming matrix or an index of the beamforming matrix.

In a possible implementation, the first message includes a value of each submatrix in the beamforming matrix.

In a possible implementation, the first message includes an index of each submatrix in the beamforming matrix.

In a possible implementation, that a baseband unit obtains a first parameter based on an interference detection result includes: The baseband unit obtains the first parameter based on a historically used parameter value and a stepping value.

In the foregoing implementation, the beam coverage direction can be adjusted in a step by step (step by step) manner, which helps to make a beam coverage direction adjustment process smoother and more refined.

In a possible implementation, the stepping value is positively correlated with interference strength, that is, larger interference strength indicates a larger corresponding stepping value.

In the foregoing implementation, a base station is supported in greatly adjusting the beam coverage direction in a scenario in which strong interference exists, to avoid interference more quickly.

In a possible implementation, the interference detection result includes an interference direction, and that a baseband unit obtains a first parameter based on an interference detection result includes: The baseband unit obtains the first parameter based on the interference direction information, where a beam coverage direction corresponding to the first parameter avoids the interference direction.

In the foregoing implementation, it is ensured that the interference direction is avoided after the coverage direction is adjusted.

In a possible implementation, that a beam coverage direction corresponding to the first parameter avoids the interference direction includes: energy of a beam pointing to the interference direction is 0.

In the foregoing implementation, because the energy of the beam pointing to the interference direction is 0, it is equivalent to that signal strength in the interference direction is 0. There is no signal strength, and there is no interference naturally. This avoids the interference direction.

In a possible implementation, that a beam coverage direction corresponding to the first parameter avoids the interference direction includes: energy of a beam pointing to the interference direction is less than energy of a beam pointing to the interference direction in a historical time period.

In the foregoing implementation, because the energy of the beam pointing to the interference direction is less than the energy of the beam pointing to the interference direction in the historical time period, it is equivalent to that signal strength in the interference direction is reduced. This reduces interference impact to some extent, and ensures that service data can still be received and sent in the interference direction.

In a possible implementation, before the baseband unit sends the first message to the radio frequency unit, the method further includes: The baseband unit determines a sending time point of the first message based on message processing duration of the radio frequency unit and a transmission delay of a fronthaul interface.

In the foregoing implementation, considering that specific time needs to be consumed for processing a message inside the radio frequency unit, and specific time also needs to be consumed when the message is transmitted between paths of the radio frequency unit and the baseband unit, the baseband unit determines time for transferring a parameter in the foregoing implementation, which is equivalent to reserving time in advance for a subsequent message processing process of the radio frequency unit and a message transmission process. This ensures that the radio frequency unit has sufficient time to adjust the beam coverage direction, and avoids that the radio frequency unit cannot perform adjustment in time.

In a possible implementation, a time interval between the sending time point of the first message and the time point indicated by the first time information is greater than the message processing duration of the radio frequency unit.

In a possible implementation, a time interval between the sending time point of the first message and the time point indicated by the first time information is greater than the transmission delay of the fronthaul interface.

In a possible implementation, a time interval between the sending time point of the first message and the time point indicated by the first time information is greater than or equal to a sum of the message processing duration of the radio frequency unit and the transmission delay of the fronthaul interface.

In a possible implementation, that the baseband unit determines a sending time point of the first message based on message processing duration of the radio frequency unit and a transmission delay of a fronthaul interface includes: The baseband unit determines, based on duration for processing a control plane message by the radio frequency unit and a transmission delay of a control plane interface, time for transferring a parameter; and correspondingly, that the baseband unit sends the first message to the radio frequency unit includes: The baseband unit sends the first message to the radio frequency unit through the control plane interface.

In a possible implementation, that the baseband unit determines a sending time point of the first message based on message processing duration of the radio frequency unit and a transmission delay of a fronthaul interface includes: The baseband unit determines, based on duration for processing a control plane message by the radio frequency unit and a transmission delay of a data plane interface, time for transferring a parameter; and correspondingly, that the baseband unit sends the first message to the radio frequency unit includes: The baseband unit sends the first message to the radio frequency unit through the data plane interface.

In the foregoing implementation, a parameter related to the coverage direction can be transferred in a plurality of manners such as the control plane interface and the data plane interface.

In a possible implementation, that the baseband unit generates a first message based on the first parameter includes:

The baseband unit generates the first message based on the first parameter in response to the interference detection result indicating that atmospheric duct interference exists;
the baseband unit generates the first message based on the first parameter in response to the interference detection result indicating that atmospheric duct interference disappears;
the baseband unit generates the first message based on the first parameter in response to the interference detection result indicating that intensity of atmospheric duct interference decreases; or
the baseband unit generates the first message based on the first parameter in response to the interference detection result indicating that a direction of atmospheric duct interference changes.

In the foregoing implementation, a scenario in which the atmospheric duct interference is avoided is supported.

In a possible implementation, the method further includes:
The baseband unit generates a second message, where the second message indicates the radio frequency unit to send a specified sequence at specified time based on a second parameter, the specified sequence is used by the baseband unit to perform interference detection, and a beam coverage direction corresponding to the second parameter is different from the beam coverage direction corresponding to the first parameter; and
the baseband unit sends the second message to the radio frequency unit.

In the foregoing implementation, considering that an interference signal may not be continuously received after the beam coverage direction is adjusted, the original beam coverage direction is restored when the specified sequence is sent, to help the baseband unit continuously perform interference detection based on the specified sequence.

In a possible implementation, the second message includes second time information, and the second time information indicates a time point at which the second parameter starts to take effect.

In a possible implementation, the second message includes second duration information, and the second duration information indicates continuous effective duration of the second parameter.

In a possible implementation, the second parameter includes a downtilt angle, and the first message includes a value of the downtilt angle or a variation of the downtilt angle.

In a possible implementation, the second parameter includes a beamforming matrix, and the second message includes a value of the beamforming matrix or an index of the beamforming matrix.

In a possible implementation, the method further includes:
the baseband unit generates a third message if the radio frequency unit sends a calibration sequence at the specified time, where the third message indicates the radio frequency unit to stop sending the calibration sequence, and the calibration sequence is used to calibrate a transmission channel of the radio frequency unit; and
the baseband unit sends the third message to the radio frequency unit.

In a possible implementation, the third message further indicates the radio frequency unit to resend the calibration sequence after effective time of the second parameter ends; or
the third message includes third time information, and the third time information indicates a time point at which the calibration sequence is sent.

In a possible implementation, the third message includes an enablement identifier, and the enablement identifier is used to identify sending of the calibration sequence or termination of sending the calibration sequence.

According to a second aspect, an interference avoidance method is provided. In the method, a radio frequency unit receives a first message from a baseband unit, where the first message indicates the radio frequency unit to adjust a beam coverage direction based on a first parameter; and the radio frequency unit adjusts the beam coverage direction based on the first message and the first parameter.

In a possible implementation, that the radio frequency unit adjusts the beam coverage direction based on the first message and the first parameter includes: The radio frequency unit automatically adjusts the beam coverage direction based on the first message and the first parameter.

In a possible implementation, the first message includes first time information, and the first time information indicates a time point at which the first parameter starts to take effect. That the radio frequency unit adjusts the beam coverage direction based on the first message and the first parameter includes: The radio frequency unit starts to adjust the beam coverage direction at the time point indicated by the first time information.

In a possible implementation, the first time information includes a frame number from which the first parameter starts to take effect. That the radio frequency unit adjusts the beam coverage direction based on the first message and the first parameter includes: The radio frequency unit starts to adjust the beam coverage direction in a radio frame corresponding to the frame number.

In a possible implementation, the first time information includes a subframe number from which the first parameter starts to take effect. That the radio frequency unit adjusts the beam coverage direction based on the first message and the first parameter includes: The radio frequency unit starts to adjust the beam coverage direction in a subframe corresponding to the subframe number.

In a possible implementation, the first time information includes a frame number and a subframe number from which the first parameter starts to take effect. That the radio frequency unit adjusts the beam coverage direction based on the first message and the first parameter includes: The radio frequency unit starts to adjust the beam coverage direction in a subframe corresponding to the subframe number and a radio frame corresponding to the frame number.

In a possible implementation, the first time information includes a timestamp of the time point at which the first parameter starts to take effect.

In a possible implementation, the first message includes first duration information, and the first duration information indicates continuous effective duration of the first parameter. That the radio frequency unit adjusts the beam coverage direction based on the first message and the first parameter includes: The radio frequency unit adjusts the beam coverage direction based on effective duration.

In a possible implementation, the first message is a CPRI message or an eCPRI message.

In a possible implementation, the first parameter includes a downtilt angle, and the first message includes a value of the downtilt angle or a variation of the downtilt angle.

In a possible implementation, the first message includes an index of an interval of the value of the downtilt angle.

In a possible implementation, the first parameter includes a beamforming matrix, and the first message includes a value of the beamforming matrix or an index of the beamforming matrix.

In a possible implementation, the first message includes a value of each submatrix in the beamforming matrix.

In a possible implementation, the first message includes an index of each submatrix in the beamforming matrix.

In a possible implementation, the beam coverage direction corresponding to the first parameter avoids an interference direction.

In a possible implementation, that a beam coverage direction corresponding to the first parameter avoids the interference direction includes: energy of a beam pointing to the interference direction is 0.

In a possible implementation, that a beam coverage direction corresponding to the first parameter avoids the interference direction includes: energy of a beam pointing to the interference direction is less than energy of a beam pointing to the interference direction in a historical time period.

In a possible implementation, that a radio frequency unit receives a first message from a baseband unit includes: The radio frequency unit receives the first message through a control plane interface.

In a possible implementation, that a radio frequency unit receives a first message from a baseband unit includes: The radio frequency unit receives the first message through a data plane interface.

In a possible implementation, the method further includes:

The radio frequency unit receives a second message from the baseband unit, where the second message indicates the radio frequency unit to send a specified sequence at specified time based on a second parameter, the specified sequence is used by the baseband unit to perform interference detection, and a beam coverage direction corresponding to the second parameter is different from the beam coverage direction corresponding to the first parameter; and
the radio frequency unit sends the specified sequence at the specified time based on the second message and the second parameter.

In a possible implementation, the second message includes second time information, and the second time information indicates a time point at which the second parameter starts to take effect.

In a possible implementation, the second message includes second duration information, and the second duration information indicates continuous effective duration of the second parameter.

In a possible implementation, the second parameter includes a downtilt angle, and the first message includes a value of the downtilt angle or a variation of the downtilt angle.

In a possible implementation, the second parameter includes a beamforming matrix, and the second message includes a value of the beamforming matrix or an index of the beamforming matrix.

In a possible implementation, the method further includes:

The radio frequency unit receives a third message from the baseband unit, where the third message indicates the radio frequency unit to stop sending a calibration sequence, and the calibration sequence is used to calibrate a transmission channel of the radio frequency unit; and
the radio frequency unit stops, based on the third message, sending the calibration sequence.

According to a third aspect, a communication apparatus is provided. The apparatus includes:
a processing module, configured to obtain a first parameter based on an interference detection result, where
the processing module is further configured to generate a first message based on the first parameter, and the first message indicates the radio frequency unit to adjust a beam coverage direction based on the first parameter; and
a sending module, configured to send the first message to the radio frequency unit.

In a possible implementation, the first message includes first time information, and the first time information indicates a time point at which the first parameter starts to take effect.

In a possible implementation, the first time information includes a frame number and/or a subframe number from which the first parameter starts to take effect.

In a possible implementation, the first message includes first duration information, and the first duration information indicates continuous effective duration of the first parameter.

In a possible implementation, the first message is a CPRI message or an eCPRI message.

In a possible implementation, the first parameter includes a downtilt angle, and the first message includes a value of the downtilt angle or a variation of the downtilt angle.

In a possible implementation, the first parameter includes a beamforming matrix, and the first message includes a value of the beamforming matrix or an index of the beamforming matrix.

In a possible implementation, the processing module is configured to obtain the first parameter based on a historically used parameter value and a stepping value.

In a possible implementation, the interference detection result includes an interference direction, and the processing module is configured to obtain the first parameter based on the interference direction information, where the beam coverage direction corresponding to the first parameter avoids the interference direction.

In a possible implementation, that a beam coverage direction corresponding to the first parameter avoids the interference direction includes:
energy of a beam pointing to the interference direction is 0; or
energy of a beam pointing to the interference direction is less than energy of a beam pointing to the interference direction in a historical time period.

In a possible implementation, the processing module is configured to:
generate the first message based on the first parameter in response to the interference detection result indicating that atmospheric duct interference exists;
generate the first message based on the first parameter in response to the interference detection result indicating that atmospheric duct interference disappears;
generate the first message based on the first parameter in response to the interference detection result indicating that intensity of atmospheric duct interference decreases; or
generate the first message based on the first parameter in response to the interference detection result indicating that a direction of atmospheric duct interference changes.

In a possible implementation, the processing module is further configured to generate a second message, where the second message indicates the radio frequency unit to send a specified sequence at specified time based on a second parameter, the specified sequence is used to perform interference detection, and a beam coverage direction corresponding to the second parameter is different from the beam coverage direction corresponding to the first parameter; and
the sending module is further configured to send the second message to the radio frequency unit.

In a possible implementation, the second message includes second time information, and the second time information indicates a time point at which the second parameter starts to take effect.

In a possible implementation, the second message includes second duration information, and the second duration information indicates continuous effective duration of the second parameter.

In a possible implementation, the second parameter includes a downtilt angle, and the first message includes a value of the downtilt angle or a variation of the downtilt angle.

In a possible implementation, the second parameter includes a beamforming matrix, and the second message includes a value of the beamforming matrix or an index of the beamforming matrix.

In a possible implementation, the processing module is further configured to generate a third message if the radio frequency unit sends a calibration sequence at the specified time, where the third message indicates the radio frequency unit to stop sending the calibration sequence, and the calibration sequence is used to calibrate a transmission channel of the radio frequency unit; and
the sending module is further configured to send the third message to the radio frequency unit.

In a possible implementation, the third message further indicates the radio frequency unit to resend the calibration sequence after effective time of the second parameter ends; or
the third message includes third time information, and the third time information indicates a time point at which the calibration sequence is sent.

In a possible implementation, the third message includes an enablement identifier, and the enablement identifier is used to identify sending of the calibration sequence or termination of sending the calibration sequence.

In some embodiments, the units in the communication apparatus provided in the third aspect are implemented by using software, and the units in the communication apparatus are program modules. In some other embodiments, the units in the communication apparatus are implemented by using hardware or firmware. For specific details of the communication apparatus provided in the third aspect, refer to any one of the first aspect or the optional manners of the first aspect. Details are not described herein again.

According to a fourth aspect, a communication apparatus is provided. The apparatus is disposed in a radio frequency unit, and the apparatus includes:
a receiving module, configured to receive a first message from a baseband unit, where the first message indicates the radio frequency unit to adjust a beam coverage direction based on a first parameter; and
a processing module, configured to adjust the beam coverage direction based on the first message and the first parameter.

In a possible implementation, the processing module is configured to automatically adjust the beam coverage direction based on the first message and the first parameter.

In a possible implementation, the receiving module is further configured to receive a second message from the baseband unit. The second message indicates the radio frequency unit to send a specified sequence at specified time based on a second parameter, the specified sequence is used by the baseband unit to perform interference detection, and a beam coverage direction corresponding to the second parameter is different from the beam coverage direction corresponding to the first parameter. The apparatus further includes: a sending module, configured to send the specified sequence at the specified time based on the second parameter and the second message.

In a possible implementation, the receiving module is further configured to receive a third message from the baseband unit. The third message indicates the radio frequency unit to stop sending a calibration sequence, and the calibration sequence is used to calibrate a transmission channel of the radio frequency unit. The apparatus further includes: a sending module, configured to stop sending the calibration sequence based on the third message.

In some embodiments, the units in the communication apparatus provided in the fourth aspect are implemented by using software, and the units in the communication apparatus are program modules. In some other embodiments, the units in the communication apparatus are implemented by using hardware or firmware. For specific details of the communication apparatus provided in the fourth aspect, refer to the second aspect or any one of the optional manners of the second aspect. Details are not described herein again.

According to a fifth aspect, a communication apparatus is provided. The communication apparatus includes a processor, the processor is coupled to a memory, the memory stores at least one computer program instruction, and the at least one computer program instruction is loaded and executed by the processor, so that the communication apparatus implements the method according to the first aspect or any one of the optional manners of the first aspect. For specific details of the communication apparatus provided in the fifth aspect, refer to the first aspect or any one of the optional manners of the first aspect. Details are not described herein again.

According to a sixth aspect, a communication apparatus is provided. The communication apparatus includes a processor, the processor is coupled to a memory, the memory stores at least one computer program instruction, and the at least one computer program instruction is loaded and executed by the processor, so that the communication apparatus implements the method according to the second aspect or any one of the optional manners of the second aspect. For specific details of the communication apparatus provided in the sixth aspect, refer to the second aspect or any one of the optional manners of the second aspect. Details are not described herein again.

According to a seventh aspect, a computer-readable storage medium is provided. The storage medium stores at least one instruction. When the instruction is run on a computer, the computer is enabled to perform the method according to the first aspect or any one of the optional implementations of the first aspect.

According to an eighth aspect, a computer-readable storage medium is provided. The storage medium stores at least one instruction. When the instruction is run on a computer, the computer is enabled to perform the method according to the second aspect or any one of the optional implementations of the second aspect.

According to a ninth aspect, a computer program product is provided. The computer program product includes one or more computer program instructions. When the computer program instructions are loaded and run by a computer, the computer is enabled to perform the method according to the first aspect or any one of the optional implementations of the first aspect.

According to a tenth aspect, a computer program product is provided. The computer program product includes one or more computer program instructions. When the computer program instructions are loaded and run by a computer, the computer is enabled to perform the method according to the second aspect or any one of the optional implementations of the second aspect.

According to an eleventh aspect, a chip is provided. The chip includes a programmable logic circuit and/or program instructions. When being run, the chip is configured to implement the method according to the first aspect or any one of the optional implementations of the first aspect.

According to a twelfth aspect, a chip is provided. The chip includes a programmable logic circuit and/or program instructions. When being run, the chip is configured to implement the method according to the second aspect or any one of the optional manners of the second aspect.

According to a thirteenth aspect, a communication system is provided. The communication system includes the communication apparatus according to the third aspect and the communication apparatus according to the fourth aspect; or the communication system includes the communication apparatus according to the fifth aspect and the communication apparatus according to the sixth aspect.

### BRIEF DESCRIPTION OF DRAWINGS

FIG. 1 is a schematic of a fronthaul network in a distributed base station defined in an eCPRI protocol according to an embodiment of this application;
FIG. 2 is a schematic of an application scenario according to an embodiment of this application;
FIG. 3 is a schematic flowchart of an interference avoidance method according to an embodiment of this application;
FIG. 4 is a schematic of determining time for transferring a parameter according to an embodiment;
FIG. 5 is a schematic of a structure of a communication apparatus 500 according to an embodiment of this application;
FIG. 6 is a schematic of a structure of a communication apparatus 600 according to an embodiment of this application; and
FIG. 7 is a schematic of a structure of a communication apparatus 700 according to an embodiment of this application.

### DESCRIPTION OF EMBODIMENTS

To make objectives, technical solutions, and advantages of this application clearer, the following further describes implementations of this application in detail with reference to the accompanying drawings.

The following explains and describes some terms and concepts in embodiments of this application.

### (1) Atmospheric duct (atmospheric duct) interference

Atmospheric duct is an effect of atmospheric refraction on electromagnetic waves in special climate conditions. Under the effect of the atmospheric duct, an electromagnetic wave propagates as if in a waveguide, has an extremely low propagation loss (which is similar to free space propagation), and can go beyond the horizontal plane to implement trans-horizon transmission. When atmospheric duct occurs on a remote base station with a specific base station height level, a high-power downlink signal of the remote base station can be transmitted over a long distance to a near base station. Because long-distance transmission time exceeds an uplink and downlink guard interval of a time division duplex (time division duplex, TDD) system, the downlink signal of the remote base station is received by the near base station in a receive slot of the near base station. As a result, uplink reception of the near base station is interfered, and long-distance co-channel interference of the TDD system is generated.

### (2) Interference detection result

The interference detection result indicates external interference received by a base station. Optionally, the interference detection result is a result obtained by detecting atmospheric duct interference, and the interference detection result indicates interference caused to a base station by a radio signal transmitted by a neighboring base station or a remote base station due to impact of the atmospheric duct. The interference detection result includes at least one of interference strength information and/or interference direction information.

### (3) Interference strength information

The interference strength information indicates strength of interference received by a base station. There are many data forms of the interference strength information. Optionally, the interference strength information is received signal strength (received signal strength, RSS), a received signal strength indicator (received signal strength indicator, RSSI), power of an interference signal, or the like. Alternatively, the interference strength information is an interference strength level, or quantized interference strength.

### (4) Interference direction information

The interference direction information indicates an interference direction. Optionally, the interference direction information indicates a direction of an interference source. Alternatively, the interference direction information indicates a direction in which interference strength is greater than a threshold. There are many specific data forms of the interference direction information. For example, the interference direction information is an included angle between the interference source and a reference direction (for example, a horizontal direction or a due north direction). For another example, the interference direction information is an identifier of a spatial grid in which the interference source is located. The spatial grid is equivalent to a quantized angle or an angle interval. The space grid is obtained through division of space centered on an antenna.

### (5) Beam (beam)

The beam is a radio signal transmitted by an antenna array in a specific direction.

### (6) Coverage

The coverage, also called coverage space, refers to a range from the ground to the sky from an antenna direction.

### (7) Beamforming (beamforming, BF)

In a conventional single-antenna communication mode, electromagnetic waves are transmitted from a single antenna to a single antenna between a base station and a mobile phone. Without physical adjustment, radiation directions of the antennas are fixed. As a result, a quantity of users served at a same frequency and same time is limited. However, in a beamforming technology, a base station has a plurality of antennas, and can automatically adjust a phase of a transmit signal of each antenna, so that effective superposition of electromagnetic waves is formed at a receiving point of the mobile phone, and a stronger signal gain is generated to overcome a loss. This achieves an objective of improving received signal strength. For example, conventional single-antenna communication is like a light bulb that illuminates an entire room. However, the beamforming is like a flashlight whose light can intelligently converge to a target position, and a quantity of flashlights may be further determined based on a quantity of targets. In a communication system, a larger quantity of antennas and a larger scale indicate a more obvious effect that the beamforming can play. After entering a 5G era, as an antenna array is expanded from one dimension to two dimensions, the beamforming technology evolves to three-dimensional (3-dimension, 3D) beamforming, so that shapes of an antenna directivity pattern in both a horizontal direction and a vertical direction can be controlled. The 3D beamforming enables a base station to accurately point signals to target users based on different spatial distribution of the users.

### (8) Beamforming matrix

The beamforming matrix is a parameter that supports an antenna array in generating a specific beam. The specific beam herein includes but is not limited to a beam in a specific direction, a beam in a specific shape, or a beam with specific power (or energy).

Optionally, the beamforming matrix is a weight matrix, to be specific, each element in the beamforming matrix is a weight, and the weight is used to perform vector multiplication with a radio signal received and/or transmitted by an antenna. This is called "weighting the antenna".

In some other embodiments, the weight matrix is replaced with another parameter used to implement beamforming, for example, a steering vector (steering vector), a precoding matrix in long term evolution (Long Term Evolution, LTE), and a signal amplitude and a phase of an antenna port.

### (9) Index of a beamforming matrix

The index of the beamforming matrix is used to search for a corresponding beamforming matrix in a group of pre-stored beamforming matrices. A form of the index includes but is not limited to a number, a name, and the like.

### (10) Cell (cell)

The cell is an area obtained by dividing a signal coverage area in a mobile network system. The cell may be a hexagon, a square, a circle, or some other shape, usually a hexagonal cellular shape.

### (11) Downtilt angle (downtilt)

The downtilt angle is an angle between an antenna and a horizontal direction.

### (12) Variation of a downtilt angle (namely, a Δ downtilt angle, also called a delta downtilt angle)

The variation of the downtilt angle is a difference between a new value of the downtilt angle and an old value of the downtilt angle. For example, if an original value of the downtilt angle is 2° and a new value of the downtilt angle is 3° after the downtilt angle is adjusted, the variation of the downtilt angle is 1°.

### (13) Stepping value

The stepping value, also called a step size (step size), refers to an adjustment amplitude each time.

### (14) A radio frame (a radio frame, or referred to as a system frame, a system frame)

In mobile communication, data is transmitted in a form of frame in a wireless network. The radio frame is equivalent to a data sending periodicity, or a time unit of data transmission. In 5G (the fifth generation) and LTE, one radio frame occupies 10 ms.

### (15) Frame number

The frame number is a number of a radio frame, and the frame number is information identifying the radio frame. For example, frame numbers are 0 to 1023 (1024 standard).

### (16) Subframe (subframe)

A subframe is a time unit smaller than a radio frame, and one radio frame includes a plurality of subframes. For example, in LTE, one radio frame includes 10 subframes, each subframe is 1 millisecond (millisecond, ms), and duration of each subframe is equal to one transmission time interval (transmission time interval, TTI). One subframe includes a plurality of slots (slot).

### (17) Subframe number

The subframe number is a number of a subframe, and the subframe number identifies a corresponding subframe in a radio frame. For example, in LTE, one radio frame includes 10 subframes, and subframe numbers of the 10 subframes are sequentially 0 to 9.

### (18) Specified sequence

The specified sequence is a sequence used for interference detection. The specified sequence is any sequence that is different from service data. For example, the specified sequence is a training sequence, a pseudo-random sequence, a preamble sequence, or the like. For example, the specified sequence is an m sequence, a GOLD sequence, or a ZC (Zadoff-Chu) sequence.

Abasic procedure of performing interference detection based on the specified sequence is generally as follows: A base station A and a base station B pre-store the specified sequence; the base station A sends a radio signal including the specified sequence; the base station B performs autocorrelation calculation and/or cross-correlation calculation based on the received radio signal and the locally stored specified sequence; and if a correlation result between the received radio signal and the locally stored specified sequence is greater than a threshold, the base station B determines that the base station A causes interference to the base station B. Optionally, when the base station A sends a radio signal including the specified sequence, the base station B also sends a radio signal including the specified sequence. The base station A detects, in a similar manner, whether the base station B causes interference to the base station A.

### (19) Channel calibration

The channel calibration is to track and compensate for a channel delay and amplitude/phase characteristics, so that amplitude/phase characteristics of a transmission channel are consistent with those of a reference channel, channel errors are reduced, and a system precision requirement is met.

### (20) Calibration sequence

The calibration sequence is used to calibrate a transmission channel of the radio frequency unit. Optionally, the calibration sequence is pre-stored in a baseband unit. For example, the calibration sequence is a training sequence or a reference signal sequence, for example, a 2048-point Golay sequence. Alternatively, the calibration sequence is generated by the baseband unit based on a cell identity.

### (21) Base station

The base station is a wireless communication site installed at a fixed location in a cellular mobile communication network. A main function of the base station is to provide wireless coverage and support communication between a terminal and a core network. The base station includes but is not limited to an evolved NodeB (evolved NodeB, eNB or e-NodeB) in LTE, a gNodeB (gNodeB, gNB) in a 5G network like new radio (New Radio, NR), or the like. A physical structure of the base station mainly includes a baseband unit (baseband unit, BU) and a radio frequency unit (Radio Unit, RU).

### (22) Baseband unit

The BU is a module or apparatus that has a baseband signal processing function and/or an RU management function. Baseband signal processing includes, for example, channel coding, multiplexing, modulation, spreading, limiting power of a carrier, and canceling power limiting. For example, the BU is a building baseband unit (baseband unit, BBU), a central unit (central unit, CU), a distributed unit (distributed unit, DU), or the like.

### (23) Radio frequency unit

An RU is a module or an apparatus that has an intermediate frequency signal, a radio frequency signal, or has a function of processing an intermediate frequency signal and a radio frequency signal. For example, the RU is a remote radio unit (remote radio unit, RRU), or an active antenna unit (active antenna unit, AAU).

### (24) Distributed base station (distributed base station, DBS)

The distributed base station means base stations in which a baseband unit and a radio frequency unit are deployed separately. A core concept of the distributed base station is to divide a conventional macro base station into two functional modules based on functions. Baseband, main control, transmission, and clock functions of the base station are integrated on a module of a baseband unit (usually called a BU or BBU). The baseband unit is small and can be flexibly installed. The intermediate and radio frequency functions such as a transceiver and a power amplifier are integrated on another RF unit (usually called an RU), and the radio frequency unit is installed on an antenna. The radio frequency unit and the baseband unit are connected through optical fibers to form the distributed base station.

### (25) CU and DU

In a 5G network, the BBU is evolved into two entities: the CU and the DU. The CU is mainly configured to undertake a non-real-time function, for example, processing of a higher layer protocol stack, for example, processing of a packet data convergence protocol (packet data convergence protocol, PDCP) layer and a radio resource control (radio resource control, RRC) layer. Optionally, the CU is further configured to undertake functions of some core network and edge application services. The DU is mainly configured to undertake a real-time function in the BBU, for example, a media access control (media access control, MAC) layer and a radio link control protocol (radio link control, RLC) layer functional module.

### (26) AAU

The RRU and a passive antenna are integrated to form the AAU. The AAU is configured to implement functions of the RRU and the antenna. Optionally, the AAU is further configured to implement functions of some physical layers in the BBU.

### (27) Common public radio interface (common public radio interface, CPRI)

The CPRI is an interface standard between the BBU and the RRU, and is used to replace a conventional coaxial cable connection. A CPRI protocol provides a specification for a communication interface between radio equipment control (radio equipment control, REC) and radio equipment (radio equipment, RE) in a cellular wireless network. A typical instance of the REC is the BBU, and a typical instance of the RE is the RRU. The CPRI is an interface standard based on a direct cable connection, implements data multiplexing through TDM, needs to exclusively occupy a transmission bandwidth, and defines three types of data streams: a user data stream, a control and management data stream, and a synchronization data stream. The user plane data stream is used to transmit a quantized IQ-modulated (I is in-phase (in-phase), Q is quadrature (quadrature)) signal of an RRU antenna.

### (28) eCPRI

The eCPRI is an interface standard evolved from the CPRI. An eCPRI protocol defines specifications for connecting the eCPRI REC (eREC) and eCPRI RE (eRE) through a fronthaul network (fronthaul network). A typical instance of the eREC is the BBU, and a typical instance of the eRE is the AAU or RRU. Different from the CPRI, the eCPRI is a packet-based interface standard, does not specify a network implementation form, and may be implemented based on any network, like Ethernet, an internet protocol (internet protocol, IP), a transmission control protocol (transmission control protocol, TCP), a user datagram protocol (user datagram protocol, UDP), and an optical transport network (optical transport network, OTN). Based on a BBU-RRU splitting mode defined by the 3rd generation partnership project (3rd Generation Partnership Project, 3GPP), the eCPRI proposes several division modes for reference. Some or all physical layer functions are implemented by the RRU. In this way, data transmitted between the BBU and the RRU is converted from an IQ signal on an antenna to a modulation symbol (IID), a coded bit sequence (ID), or even an original data bit (D). Compared with the CPRI, the eCPRI helps reduce a transmission bandwidth between a baseband unit and a radio frequency unit, to meet bandwidth resource requirements of large-bandwidth multi-antenna services such as massive multiple-input multiple-output (massive multiple-input multiple-output, massive MIMO).

### (29) Fronthaul interface and fronthaul network

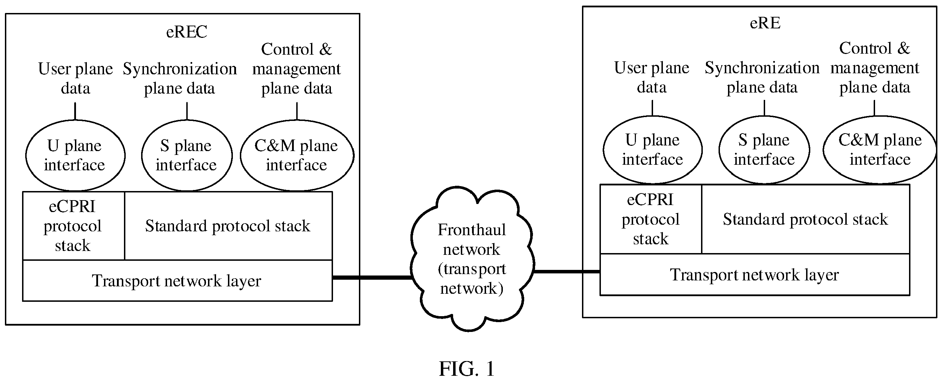

The fronthaul interface is a communication interface between a baseband unit and a radio frequency unit. The fronthaul interface includes but is not limited to a CPRI or an eCPRI. Certainly, the fronthaul interface may also be another interface evolved from the CPRI or eCPRI. The fronthaul network is a network between the baseband unit and the radio frequency unit. FIG. 1 is a schematic of a fronthaul network in a distributed base station defined in an eCPRI protocol. As shown in FIG. 1, the fronthaul network is a network between an eREC (namely, a baseband unit like a BBU) and an eRE (namely, a radio frequency unit like an AAU or an RRU).

The following describes, by using an example, an architecture of a communication protocol on which embodiments of this application are based.

FIG. 1 is a diagram of an architecture of an eCPRI protocol according to an embodiment. FIG. 1 shows a position of the eCPRI protocol in a protocol stack. As shown in FIG. 1, the eCPRI protocol and a standard protocol stack (like an HTTP protocol and an FTP protocol) of an application layer are at a same layer in the protocol stack.

A transport layer protocol at a bottom layer of the eCPRI protocol is optionally a TCP/IP protocol or an Ethernet MAC layer protocol. To be specific, from a perspective of a packet format, a packet header encapsulated at an outer layer of an eCPRI message may be a UDP header or a TCP header, or a TCP/IP protocol stack may be skipped, and a MAC Ethernet frame header is directly encapsulated at the outer layer of the eCPRI message.

The eCPRI protocol provides three types of interfaces. As shown in FIG. 1, the eCPRI protocol provides a user plane (user plane, U plane for short, also referred to as data plane) interface, a synchronization plane (synchronization plane, S plane for short) interface, and a control and management plane (control & management plane, C&M plane or C plane for short) interface.

The user plane interface is configured to transmit service data between a base station and user equipment, for example, IQ data, namely, sampling data after orthogonal frequency division multiplexing (orthogonal frequency division multiplexing, OFDM) modulation. Optionally, the user plane interface is further configured to transmit real-time control data related to the service data.

The synchronization plane interface is configured to transmit synchronization and timing information of data between a BBU and an RRU.

The control and management plane interface is configured to transmit data obtained by the BBU performing operation administration and maintenance (operation administration and maintenance, OAM) on the RRU.

The following describes an application scenario of embodiments of this application by using an example.

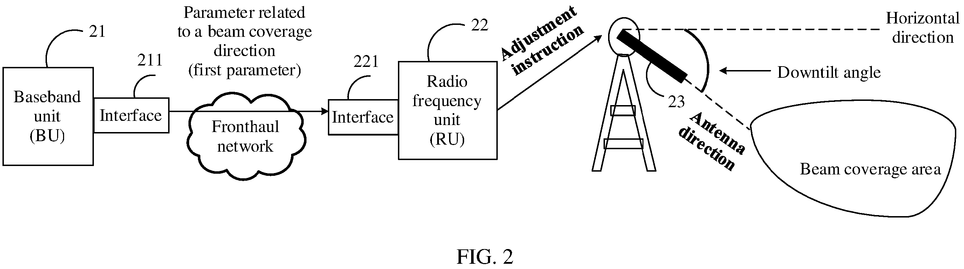

FIG. 2 is a schematic of an application scenario according to an embodiment of this application. The scenario shown in FIG. 2 includes a baseband unit 21, a radio frequency unit 22, and an antenna 23.

Optionally, with reference to FIG. 1, the baseband unit 21 in FIG. 2 is an eREC in FIG. 1. The radio frequency unit 22 in FIG. 2 is an eRE in FIG. 1. In FIG. 2, both a fronthaul interface 211 of the baseband unit 21 and a fronthaul interface 221 of the radio frequency unit 22 are eCPRIs. The fronthaul interface 211 of the baseband unit 21 and the fronthaul interface 221 of the radio frequency unit 22 in FIG. 2 include but are not limited to the U plane interface, the S plane interface, or the C&M plane interface in FIG. 1.

The baseband unit 21 is configured to determine, based on a status of interference received by a base station, whether to adjust a beam coverage direction of the base station, and transfer parameters (such as a downtilt angle and a beamforming matrix) related to the beam coverage direction to the radio frequency unit 22. Optionally, the baseband unit 21 is specifically configured to determine an adjustment occasion, an adjustment amount, adjustment duration, and the like of the beam coverage direction, and transfer parameters related to the adjustment occasion, the adjustment amount, and the adjustment duration to the radio frequency unit 22. Optionally, the baseband unit 21 is further configured to detect, based on an uplink signal received from the radio frequency unit 22, a situation in which the base station is interfered by a neighboring base station or a remote base station.

The radio frequency unit 22 is configured to automatically adjust the beam coverage direction of the antenna 23 based on the parameters related to the beam coverage direction received from the baseband unit 21.

The antenna 23 is configured to form beam coverage in a specified direction under control of the radio frequency unit 22.

For example, as shown in FIG. 2, the baseband unit 21 transfers the downtilt angle to the radio frequency unit 22 through the fronthaul interface 211, and the radio frequency unit 22 sends an instruction to the antenna 23 based on the downtilt angle received from the fronthaul interface 221. The instruction includes the downtilt angle received from the baseband unit 21. The antenna 23 executes the instruction received from the radio frequency unit 22, and adjusts a downtilt angle to the downtilt angle included in the instruction, so that a beam coverage direction generated by the antenna 23 is adjusted to the direction specified by the baseband unit 21.

The baseband unit 21 and the radio frequency unit 22 are connected through a fronthaul network. The fronthaul network includes but is not limited to a wired network or a wireless network. The fronthaul network includes but is not limited to a TCP/IP network, an Ethernet, or a private network. Hardware on which the fronthaul network is based during implementation includes but is not limited to an optical fiber, a feeder, a switch, a router, and the like.

The radio frequency unit 22 and the antenna 23 are connected through the feeder or the optical fiber.

The following describes an example of a method procedure in embodiments of this application.

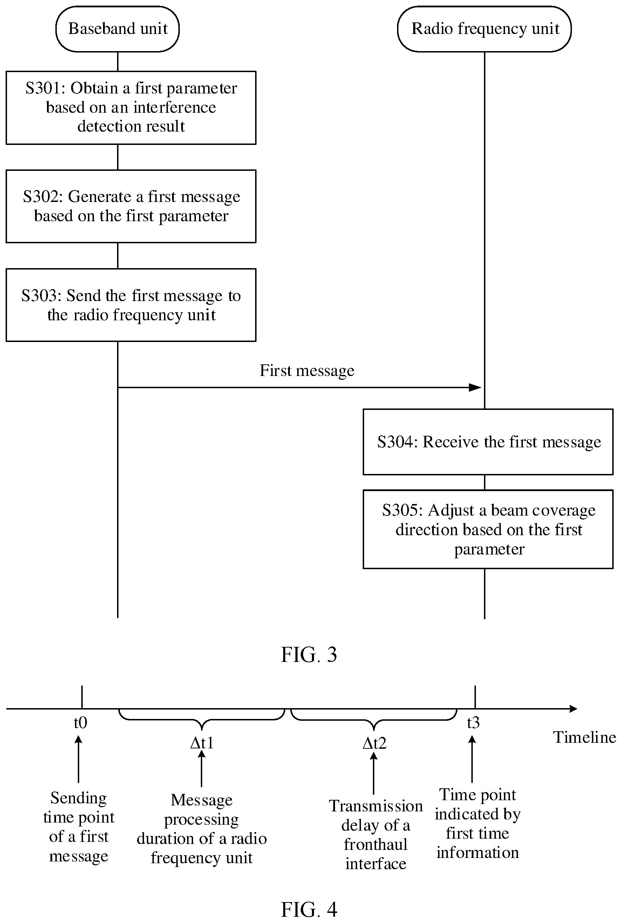

FIG. 3 is a schematic flowchart of an interference avoidance method according to an embodiment of this application. Interaction bodies of the method shown in FIG. 3 include a baseband unit and a radio frequency unit.

Optionally, with reference to FIG. 1, the method shown in FIG. 3 is based on the architecture of the communication protocol shown in FIG. 1. The baseband unit in FIG. 3 is an eREC in FIG. 1. The radio frequency unit 22 in FIG. 3 is an eRE in FIG. 1. In the method shown in FIG. 3, a message between the radio frequency unit and the baseband unit is transmitted through the U plane interface, the C&M plane interface, or the S plane interface in FIG. 1.

Optionally, with reference to FIG. 2, a network deployment scenario on which the method shown in FIG. 3 is based is shown in FIG. 2. The baseband unit in the method shown in FIG. 3 is the baseband unit 21 in FIG. 2, and the radio frequency unit 22 in the method shown in FIG. 3 is the radio frequency unit 22 in FIG. 2.

The method shown in FIG. 3 includes the following step S301 to step S305.

S301: The baseband unit obtains a first parameter based on an interference detection result.

For the concept of the interference detection result, refer to the foregoing term and concept description (2). How the baseband unit obtains the interference detection result includes a plurality of manners. The following describes, with reference to an implementation 1 to an implementation 3 by using examples, implementations of obtaining the interference detection result.

Implementation 1: The baseband unit determines the interference detection result based on an uplink signal received by the radio frequency unit.

The implementation 1 is a blind detection manner. In a possible implementation, the radio frequency unit sends the received uplink signal to the baseband unit. After the baseband unit receives the uplink signal from the radio frequency unit, the baseband unit measures interference received by a base station based on the uplink signal, and obtains the interference detection result. For example, the baseband unit detects strength of the uplink signal in a time period in which no service data is sent. If the strength of the uplink signal is obviously higher than normal background noise strength, and the uplink signal presents a feature of decreasing power as time changes, it is determined that the base station is interfered by a neighboring base station or a remote base station.

Implementation 2: The baseband unit determines the interference detection result based on a specified sequence.

In a possible implementation, the radio frequency unit of a base station sends a radio signal including the specified sequence, the baseband unit of the base station detects a signal at a specified position, and correlation and/or cross-correlation is performed on the signal at a specified position and the specified sequence to obtain an interference status of the base station (namely, the interference detection result).

Implementation 3: The baseband unit receives the interference detection result from the radio frequency unit.

In a possible implementation, after the radio frequency unit receives the uplink signal, the radio frequency unit measures, based on the uplink signal, interference received by a base station, to obtain the interference detection result. The radio frequency unit sends the interference detection result to the baseband unit. The baseband unit receives the interference detection result sent by the radio frequency unit.

The first parameter is a parameter related to a beam coverage direction. A type of the first parameter includes a plurality of cases. The following describes the type of the first parameter by using examples.

Optionally, the first parameter is a parameter in a space domain dimension, namely, an antenna parameter. For example, the first parameter is a downtilt angle of an antenna. Alternatively, the first parameter is a beamforming matrix.

Alternatively, the first parameter is another parameter that can indicate an antenna angle other than a downtilt angle, for example, an elevation angle, an azimuth angle, a lobe angle, and a half-power angle of an antenna.

Alternatively, the first parameter is another parameter used to support beamforming other than the beamforming matrix, for example, a steering vector, a precoding matrix, or a signal amplitude and a phase of an antenna port.

Alternatively, the first parameter is a parameter related to radiation energy of an antenna, for example, transmit power or a gain of the antenna.

A rule for selecting the two parameters: the downtilt angle and the beamforming matrix, that is, a manner of determining the type of the first parameter, includes a plurality of specific implementations. The following describes the rule for selecting the downtilt angle and the beamforming matrix by using examples.

In a possible implementation, if an antenna is a large-scale antenna array, the beam coverage direction is adjusted in a manner of adjusting the beamforming matrix. If an antenna scale is small, the beam coverage direction is adjusted in a manner of adjusting the downtilt angle. For example, the baseband unit stores hardware type information of the antenna. When the baseband unit determines, based on the interference detection result, that the beam coverage direction needs to be adjusted, the baseband unit determines, based on the hardware type information, whether the antenna is the large-scale antenna array. If the hardware type information indicates that the antenna is the large-scale antenna array, the baseband unit selects the beamforming matrix as the first parameter. If the hardware type information indicates that the antenna is not the large-scale antenna array, the baseband unit selects the downtilt angle as the first parameter. In this implementation, a beam coverage direction adjustment manner can be flexibly determined based on different types of hardware. Optionally, a size of the antenna is defined based on whether a massive MIMO technology is supported. For example, the large-scale antenna array means that a quantity of antennas reaches 16, 32, 64, 128, or more.

Optionally, the beam coverage direction corresponding to the first parameter avoids an interference direction. For example, an original beam coverage direction of the antenna is from a k^{th} floor to an m^{th} floor. The baseband unit determines, through interference detection, that the interference direction is from the m^{th} floor, and determines the first parameter based on an interference detection result. The beam coverage direction corresponding to the first parameter is from the k^{th} floor to an (m-1)^{th} floor. Because the beam coverage direction prevents an interference signal in a direction of the m^{th} floor from entering a base station, that is, avoids a signal in the interference direction, to avoid interference to the base station.

How the baseband unit determines the first parameter includes a plurality of implementations. The following describes, with reference to an implementation I to an implementation IV by using examples, a manner of determining the first parameter.

The implementation I: The baseband unit determines the first parameter based on a historically used parameter value and a stepping value.

The downtilt angle is used as an example. For example, a downtilt angle 1 historically used by the baseband unit is X°, and a stepping value is k°. The baseband unit determines a downtilt angle 2 based on the historically used downtilt angle 1 and the stepping value. A value of the downtilt angle 2 is (X-k)°, and the downtilt angle 2 is the first parameter.

The beamforming matrix is used as an example. For example, energy of a beam that is of a beamforming matrix 1 historically used by the baseband unit and that points to the interference direction is m watts, and a stepping value is k watts. The baseband unit obtains a beamforming matrix 2 based on the historically used beamforming matrix 1 and the stepping value. Energy of a beam that is of the beamforming matrix 2 and that points to the interference direction is (m-k) watts, and the beamforming matrix 2 is the first parameter.

The stepping value used by the baseband unit involves a plurality of implementations. The following describes the implementations of the stepping value by using examples with reference to a case 1-1 and a case 1-2.

Implementation 1-1: The stepping value is related to interference strength.

For example, there is a positive correlation relationship between the stepping value and the interference strength, that is, larger interference strength indicates a larger corresponding stepping value. In a possible implementation, the baseband unit stores a correspondence between the interference strength and the stepping value. After the baseband unit obtains interference strength information, the baseband unit selects, based on the prestored correspondence, the stepping value corresponding to the interference strength information. The correspondence between the interference strength and the stepping value is, for example, a mapping table or a mathematical function.

Implementation 1-2: The stepping value is fixed.

In a possible implementation, the baseband unit stores the stepping value, and each time the beam coverage direction needs to be adjusted, the baseband unit determines an adjusted parameter based on the stored stepping value. Optionally, the stepping value is a parameter preset by a network administrator.

Implementation II: The baseband unit determines the first parameter based on the interference direction information.

Optionally, energy of a beam that points to the interference direction and that is in the beam coverage direction corresponding to the first parameter is 0. In a possible implementation, the baseband unit uses, as a constraint condition, that energy of a beam pointing to the interference direction is 0, and determines the first parameter based on the constraint condition by using an adaptive beamforming algorithm.

Optionally, energy of a beam that points to the interference direction and that is in the beam coverage direction corresponding to the first parameter is less than energy of a beam pointing to the interference direction in a historical time period. In other words, the energy of the beam that points to the interference direction and that is in the beam coverage direction corresponding to the first parameter is less than energy of a beam that corresponds to a historically used beam matrix and that points to the interference direction. In a possible implementation, the baseband unit uses, as a constraint condition, that energy of a beam pointing to the interference direction is less than energy of a beam pointing to the interference direction in a historical time period, and determines the first parameter based on the constraint condition by using an adaptive beamforming algorithm.

Implementation III: The baseband unit determines the first parameter in an attempt and convergence manner.

The downtilt angle is used as an example. The baseband unit stores an adjustment range of the downtilt angle, and the baseband unit sequentially attempts to adjust the beam coverage direction by using each downtilt angle within the adjustment range, until the downtilt angle reaches a preset maximum downtilt angle, or until interference strength is less than a threshold.

Implementation IV: The baseband unit receives the first parameter from a specified network element except a base station.

In a possible implementation, the baseband unit sends the interference detection result to the specified network element except the base station. The specified network element includes but is not limited to a network management device, a control plane device, a terminal, a core network, and the like. The specified network element determines the first parameter based on the interference detection result, and sends the first parameter to the baseband unit. The baseband unit receives the first parameter from the specified network element.

S302: The baseband unit generates a first message based on the first parameter.

The first message indicates the radio frequency unit to adjust the beam coverage direction based on the first parameter.

Optionally, the first message is a fronthaul interface message. An interface protocol type on which the first message is based includes a plurality of implementations. For example, the first message is a CPRI message. For another example, the first message is an eCPRI message. Alternatively, the first message is a message specified in another protocol of a fronthaul interface except a CPRI and an eCPRI. For example, the first message is a message defined in a protocol of a next generation interface evolved from the eCPRI.

Content of the first message includes a plurality of implementations. The following describes, by using examples with reference to three aspects, content that may be included in the first message.

First aspect: a time point for adjusting the beam coverage direction

For example, the first message includes first time information, and the first time information indicates a time point at which the first parameter starts to take effect. Adjusting the downtilt angle is used as an example. The first time information indicates time at which the radio frequency unit uses a new downtilt angle (the first parameter), or time at which a downtilt angle of an antenna is adjusted to a new downtilt angle (the first parameter).

A specific form of the first time information includes a plurality of implementations. The following describes possible implementations of the first time information by using examples with reference to an implementation 1 to an implementation 3.

The implementation 1: The first time information includes a frame number and/or a subframe number from which the first parameter starts to take effect.

For example, the first message includes a frame number m and a subframe number n, and the first message indicates the radio frequency unit to adjust the beam coverage direction based on the first parameter when a subframe number in a radio frame whose frame number is m is n, where m and n are positive integers greater than or equal to 0.

For another example, the first message includes a frame number m, and the first message indicates the radio frequency unit to adjust the beam coverage direction based on the first parameter in a specified subframe (for example, a first subframe, a last subframe, or another default subframe) in a radio frame whose frame number is m.

For another example, the first message includes a subframe number n, and the first message indicates the radio frequency unit to adjust the beam coverage direction based on the first parameter when a subframe number in a current radio frame is n.

The implementation 2: The frame number and the subframe number in the implementation 1 are replaced with other information that can identify a specified time period in a radio frame, for example, a number of a time unit with a finer granularity than a subframe, for example, a number of a slot, a number of a sub-slot, or a number of a mini-slot (mini-slot), so that the beam coverage direction is adjusted more precisely.

The implementation 3: The frame number and the subframe number in the implementation 1 are replaced with a timestamp of a time point at which the first parameter starts to take effect. For example, a form of the first time information is * *year* * month * *day* *minute* * second.

Second aspect: Effective duration of an adjusted beam coverage direction

For example, the first message includes first duration information, and the first duration information indicates continuous effective duration of the first parameter.

A specific form of the first duration information includes a plurality of implementations. The following describes possible implementations of the first duration information by using examples with reference to an implementation 1 to an implementation 3.

Implementation 1: The first duration information includes a quantity of continuous effective TTIs for the first parameter, a quantity of continuous effective slots for the first parameter, or a quantity of continuous effective radio frames for the first parameter.

The beamforming matrix is used as an example. For example, the first duration information includes a quantity m of TTIs (the first duration information) and an index of a beamforming matrix k, and the first duration information indicates that the beamforming matrix k of the radio frequency unit is effective for m TTIs continuously, where m and k are positive integers greater than or equal to 0.

Alternatively, the quantity of TTIs, the quantity of slots, the quantity of radio frames, and the like in the implementation 1 are replaced with other time units related to data transmission in wireless communication, for example, a quantity of sub-slots, a quantity of half-slots, and a quantity of mini-slots.

Implementation 2: The first duration information includes a quantity of continuous effective seconds, minutes, hours, or milliseconds for the first parameter.

The beamforming matrix is used as an example. For example, the first duration information includes m minutes (the first duration information) and an index of a beamforming matrix k, and the first duration information indicates that the beamforming matrix k of the radio frequency unit is effective for m minutes continuously, where m and k are positive integers greater than or equal to 0.

Implementation 3: The first duration information indicates a time point at which the first parameter ends to take effect.

For example, the first duration information is a frame number, a subframe number, a slot number, or a sub-slot number from which the first parameter ends to take effect. For another example, the first duration information is a timestamp at a time point at which the first parameter ends to take effect.

In an example embodiment, the first message generated by the baseband unit includes two types of information indicating time. One type of information indicating time (namely, the first time information) indicates that a time point at which the first parameter starts to take effect is a time point 1, and the other type of information indicating time (namely, the first duration information) indicates that a time point at which the first parameter ends to take effect is a time point 2. After receiving the first message, the radio frequency unit starts to adjust the beam coverage direction based on the first parameter at the time point 1 and performs timing, and stops adjusting the beam coverage direction based on the first parameter when the time point 2 arrives.

Third aspect: a parameter value corresponding to an adjusted beam coverage direction

Forms of a value of an adjusted downtilt angle include a plurality of implementations. The following describes possible forms of the value of the adjusted downtilt angle by using examples with reference to a case 1 and a case 2.

The case 1: Adjust a downtilt angle.

A specific implementation of the case 1 includes but is not limited to the following implementation A to implementation C.

Implementation A: The first message includes a value of an adjusted downtilt angle.

For example, the first message includes m°, and the first message indicates the radio frequency unit to adjust a downtilt angle of an antenna to m°.

Implementation B: The first message includes a variation between a downtilt angle after adjustment and a downtilt angle before the adjustment.

For example, an original downtilt angle of the antenna is k°, the first message includes m°, and the first message indicates the radio frequency unit to adjust the downtilt angle of the antenna to (k-m)°.

Implementation C: The first message includes an index of an adjusted downtilt angle.

For example, the baseband unit divides a value range of a downtilt angle into a plurality of intervals, and allocates a corresponding index to the downtilt angle in each interval, to quantize the downtilt angle, and then an index of an adjusted downtilt angle is included in the first message.

The case 2: Adjust a beamforming matrix.

A specific implementation of the case 2 includes but is not limited to the following implementation A to implementation C.

Implementation A: The first message includes a value of an adjusted beamforming matrix.

For example, the first message includes a weight of each row and each column in the adjusted beamforming matrix.

Implementation B: The first message includes an index of an adjusted beamforming matrix.

Implementation C: The first message includes a value of each submatrix in the adjusted beamforming matrix, or the first message includes an index of each submatrix in the adjusted beamforming matrix.

S303: The baseband unit sends the first message to the radio frequency unit.

In some embodiments, the baseband unit transfers, to the radio frequency unit through a fronthaul interface, a parameter related to the beam coverage direction. That is, the baseband unit sends the first message through the fronthaul interface. For example, the radio frequency unit sends the first message through a CPRI interface or an eCPRI interface.

That a fronthaul interface is selected by the baseband unit to transfer a parameter related to the beam coverage direction includes a plurality of specific implementations. The following describes, by using examples with reference to an implementation 1 and an implementation 2, possible implementations for transferring the parameter related to the beam coverage direction.

Implementation 1: The baseband unit transfers the parameter related to the beam coverage direction through a control plane interface.

For example, a type of the first message is a control plane message, and the baseband unit sends the first message to the radio frequency unit through the control plane interface.

Implementation 2: The baseband unit transfers the parameter related to the beam coverage direction through a data plane interface.

For example, a type of the first message is a data plane message, and the baseband unit sends the first message to the radio frequency unit through the data plane interface.

Optionally, the baseband unit transfers the parameter related to the beam coverage direction in advance. The advance herein means that a time point at which the baseband unit sends the parameter related to the beam coverage direction is earlier than a time point at which the parameter starts to take effect. In a possible implementation of advance transmission, the baseband unit determines, based on an expected effective time point, a time point for sending the parameter related to the beam coverage direction. For example, when sending the first message including the first time information, the baseband unit determines a sending time point of the first message based on a time point indicated by the first time information. The sending time point of the first message is earlier than the time point indicated by the first time information.

How the baseband unit specifically determines when to transfer the parameter related to the beam coverage direction includes a plurality of implementations. The following uses an example for description with reference to FIG. 4.

In some embodiments, the baseband unit determines, based on an expected effective time point of a parameter, message processing duration of the radio frequency unit, and a transmission delay of a fronthaul interface, time for transferring the parameter.

The message processing duration of the radio frequency unit is duration for the radio frequency unit to parse and process a message received from the baseband unit. For example, a value range of the message processing duration of the radio frequency unit is 1 millisecond to 10 milliseconds.

How the baseband unit obtains the message processing duration of the radio frequency unit includes a plurality of implementations. Optionally, the baseband unit pre-stores the message processing duration of the radio frequency unit. For example, the baseband unit stores attribute information of the radio frequency unit. The attribute information of the radio frequency unit is, for example, from a configuration file. The baseband unit obtains the message processing duration of the radio frequency unit from the attribute information of the radio frequency unit. Alternatively, the baseband unit sends an information obtaining request to the radio frequency unit, the radio frequency unit sends the message processing duration to the baseband unit in response to the information obtaining request, and the baseband unit receives the message processing duration of the radio frequency unit from the radio frequency unit.

The transmission delay of the fronthaul interface refers to a time difference between time at which the baseband unit sends a message and time at which the message arrives at the radio frequency unit. For example, a transmission delay of the control plane interface may reach a millisecond level or a second level. A transmission delay of a data plane may be at a millisecond level or within a time range of 1 millisecond.

How the baseband unit obtains the transmission delay of the fronthaul interface includes a plurality of implementations. Optionally, the baseband unit pre-stores the transmission delay of the fronthaul interface. Alternatively, the baseband unit automatically measures the transmission delay of the fronthaul interface. For example, the baseband unit sends a test message through the fronthaul interface, the radio frequency unit records a receiving time point of the test message, and notifies the radio frequency unit of the receiving time point, and the radio frequency unit calculates the transmission delay based on a sending time point and the receiving time point of the test message.

In an example embodiment, when the control plane interface is used to transfer a parameter, the baseband unit determines, based on duration of processing a control plane message by the radio frequency unit and a transmission delay of the control plane interface, time for transferring the parameter. When the parameter is transferred through the data plane interface, the baseband unit determines, based on duration of processing a data plane message by the radio frequency unit and a transmission delay of the data plane interface, time for transferring the parameter.

FIG. 4 is a schematic of determining time for transferring a parameter according to an embodiment. In FIG. 4, t0 is an example of a sending time point (time for transferring a parameter) of a first message, Δt1 is an example of message processing duration of a radio frequency unit, t3 is an example of an expected effective time point (a time point indicated by first time information) of the parameter, and Δt2 is an example of a transmission delay of a fronthaul interface. As shown in FIG. 4, a time interval between the sending time point of the first message and the time point indicated by the first time information is greater than or equal to a sum of the message processing duration of the radio frequency unit and the transmission delay of the fronthaul interface.

Effects achieved by the foregoing implementations include but are not limited to the following. Considering that specific time needs to be consumed for processing a message inside the radio frequency unit, and specific time also needs to be consumed when the message is transmitted between paths of the radio frequency unit and the baseband unit, the baseband unit determines time for transferring a parameter in the foregoing implementation, which is equivalent to reserving time in advance for a subsequent message processing process of the radio frequency unit and a message transmission process. This ensures that the radio frequency unit has sufficient time to adjust the beam coverage direction, and avoids that the radio frequency unit cannot perform adjustment in time.

S304: The radio frequency unit receives the first message from the baseband unit.

S305: The radio frequency unit adjusts the beam coverage direction based on the first message and the first parameter.

Optionally, a process in which the radio frequency unit obtains the first parameter includes: The radio frequency unit parses the first message based on a protocol stack (for example, an eCPRI protocol stack or a CPRI protocol stack) of the fronthaul interface, and the radio frequency unit obtains the first parameter from a message body (or a payload field) of the first message.

In some embodiments, the radio frequency unit automatically adjusts the beam coverage direction based on the first message without relying on a manual configuration operation. How the radio frequency unit automatically adjusts the beam coverage direction includes a plurality of specific implementations. The following describes possible implementations for automatically adjusting the beam coverage direction by using examples with reference to an implementation 1 and an implementation 3.

Implementation 1: The radio frequency unit automatically adjusts the beam coverage direction to a direction indicated by the baseband unit.

With reference to an implementation 1-1 and an implementation 1-2, the following separately describes a case of a downtilt angle and a case of a beamforming matrix.

In a possible implementation, if the baseband unit detects that interference exists, the baseband unit indicates the radio frequency unit to decrease a downtilt angle. If the baseband unit detects that the interference disappears, the baseband unit indicates the radio frequency unit to increase the downtilt angle.

In an example embodiment, the radio frequency unit determines, based on the first message, a value of the downtilt angle indicated by the baseband unit. The radio frequency unit generates an adjustment instruction based on the value of the downtilt angle indicated by the baseband unit, and sends the adjustment instruction to an antenna. The adjustment instruction includes the value of the downtilt angle indicated by the baseband unit. In response to the adjustment instruction of the radio frequency unit, the antenna adjusts a downtilt angle to the value of the downtilt angle indicated by the baseband unit. When an interference detection result indicates that interference exists, a value of a downtilt angle in the first message is greater than a value of an original downtilt angle. When the interference detection result indicates that the interference disappears, the value of the downtilt angle in the first message is less than the value of the original downtilt angle.

How the radio frequency unit determines the value of the downtilt angle indicated by the baseband unit includes a plurality of implementations. In a possible implementation, the first message includes the value of the downtilt angle indicated by the baseband unit, and the radio frequency unit parses the first message to obtain the value of the downtilt angle included in the first message. In another possible implementation, the first message includes a variation of a downtilt angle, the radio frequency unit parses the first message to obtain the variation of the downtilt angle included in the first message, and the radio frequency unit performs subtraction or summation on a value of a downtilt angle at a current time point and the variation included in the first message, to obtain a value of the downtilt angle.

In the foregoing implementation 1-1, the downtilt angle is decreased when the interference exists, to avoid that a signal in an interference direction enters a base station. This avoids interference.

Implementation 1-2: The radio frequency unit updates the beamforming matrix to a beamforming matrix indicated by the baseband unit.

In an example embodiment, the radio frequency unit determines, based on the first message, a value of the beamforming matrix indicated by the baseband unit. The radio frequency unit updates a value of a beamforming matrix of an antenna to the value of the beamforming matrix indicated by the baseband unit, and uses the updated beamforming matrix to receive and/or send data.

How the radio frequency unit determines the value of the beamforming matrix indicated by the baseband unit includes a plurality of implementations. In a possible implementation, the first message includes the value of the beamforming matrix indicated by the baseband unit, and the radio frequency unit parses the first message to obtain the value of the beamforming matrix included in the first message. In another possible implementation, the first message includes an index of an adjusted beamforming matrix, and the radio frequency unit parses the first message to obtain the index of the beamforming matrix included in the first message. The radio frequency unit queries, from a correspondence between the stored value of the beamforming matrix and the index of the beamforming matrix, a value of a beamforming matrix corresponding to the index.

In an example embodiment, after the baseband unit updates a value of a beamforming matrix to the value of the beamforming matrix indicated by the baseband unit, energy of a beam pointing to the interference direction in beams transmitted and/or received by an antenna is 0. A possible implementation of using the beamforming matrix is as follows: After the antenna receives a signal, the radio frequency unit first performs a multiplication operation on an adjusted beamforming matrix and the received signal, and then performs further signal processing based on a signal obtained after the multiplication is performed on the matrix. Because the energy of the beam pointing to the interference direction is 0, it is equivalent to that signal strength in the interference direction is 0. There is no signal strength, and there is no interference naturally. This avoids the interference direction.

In an example embodiment, after the baseband unit updates a value of a beamforming matrix to the value of the beamforming matrix indicated by the baseband unit, energy of a beam pointing to the interference direction in beams transmitted and/or received by an antenna is less than energy of a beam pointing to the interference direction in a historical time period. A possible implementation of using the beamforming matrix is as follows: After the antenna receives a signal, the radio frequency unit first performs a multiplication operation on an adjusted beamforming matrix and the received signal, and then performs further signal processing based on a signal obtained after the multiplication is performed on the matrix. Because the energy of the beam pointing to the interference direction is less than the energy of the beam pointing to the interference direction in the historical time period, it is equivalent to that signal strength in the interference direction is reduced. This reduces interference impact to some extent, and ensures that service data can still be received and sent in the interference direction.

Implementation 2: The radio frequency unit automatically starts to adjust the beam coverage direction at a time point indicated by the baseband unit.

In an example embodiment, the radio frequency unit obtains first time information from the first message. The radio frequency unit determines, based on the first time information, an effective time point of the first parameter indicated by the baseband unit. When time reaches the effective time point indicated by the baseband unit, the radio frequency unit adjusts the beam coverage direction to a direction indicated by the baseband unit.

Implementation 3: When effective duration indicated by the baseband unit ends, the radio frequency unit automatically adjusts the beam coverage direction back to an original direction.

In an example embodiment, the radio frequency unit obtains first duration information from the first message. The radio frequency unit determines, based on the first duration information, effective duration of the first parameter indicated by the baseband unit. When actual effective duration of the first parameter reaches the effective duration indicated by the baseband unit, the radio frequency unit adjusts the beam coverage direction back to a beam coverage direction before the first parameter takes effect.

According to the method provided in this embodiment, a parameter related to the beam coverage direction is dynamically transferred between the baseband unit and the radio frequency unit based on the interference detection result, to avoid interference in a space domain dimension. Because space domain resources of a radio air interface are fully used to avoid interference without sacrificing time domain resources and frequency domain resources of the radio air interface, impact of interference avoidance on service performance is mitigated, and service performance of a base station is improved. In addition, the radio frequency unit is supported in automatically adjusting the beam coverage direction. Therefore, problems of an excessively long delay, low efficiency, and a possible performance loss in a solution of manually adjusting a coverage direction are resolved to some extent, and the coverage direction can be adjusted more quickly and efficiently.

The method shown in FIG. 3 is optionally applied to a scenario of avoiding atmospheric duct interference.

In an example embodiment, a procedure of adjusting the beam coverage direction is triggered by impact of the atmospheric duct interference. In a possible implementation, when it is detected that the atmospheric duct interference exists, a beam coverage direction adjustment procedure is entered. For example, in response to an interference detection result indicating that the atmospheric duct interference exists, the baseband unit generates the first message based on the first parameter. In a possible implementation, when it is detected that the atmospheric duct interference disappears, a beam coverage direction adjustment procedure is entered. For example, in response to an interference detection result indicating that the atmospheric duct interference disappears, the baseband unit generates the first message based on the first parameter. In a possible implementation, when it is detected that intensity of the atmospheric duct interference decreases, a beam coverage direction adjustment procedure is entered. For example, in response to an interference detection result indicating that the intensity of the atmospheric duct interference decreases, the baseband unit generates the first message based on the first parameter. In a possible implementation, when it is detected that a direction of the intensity of the atmospheric duct interference changes, a beam coverage direction adjustment procedure is entered. For example, in response to an interference detection result indicating that a direction of the atmospheric duct interference changes, the baseband unit generates the first message based on the first parameter.

In an example embodiment, interference detection is specifically detection of the atmospheric duct interference. For example, when performing the interference detection, the baseband unit considers characteristics related to the atmospheric duct interference. For example, on the basis of performing interference detection by using an uplink signal, the baseband unit further performs interference detection by using weather information of a current geographical location at a current time point and/or a known feature of a cell interfered by atmospheric duct, and by combining the uplink signal, the weather information, and the known feature of the cell interfered by the atmospheric duct.

In some embodiments of this application, automatic returning to the beam coverage direction is supported, that is, the beam coverage direction is restored to an original beam coverage direction before adjustment. How to return to the beam coverage direction includes a plurality of implementations. The following describes, by using examples with reference to a scenario 1 and a scenario 2, a procedure of returning to the beam coverage direction.

The scenario 1: When the radio frequency unit sends a specified sequence to be used for interference detection, the baseband unit indicates the radio frequency unit to restore the beam coverage direction to an original beam coverage direction.

In an example embodiment, the baseband unit generates a second message. The baseband unit sends the second message to the radio frequency unit. The radio frequency unit receives the second message from the baseband unit. The radio frequency unit adjusts the beam coverage direction at specified time based on the second parameter and the second message, and sends the specified sequence.

The second message indicates the radio frequency unit to adjust the beam coverage direction at the specified time based on the second parameter.

The specified time is time at which the radio frequency unit sends the specified sequence. For example, the specified time is a specific time point in a specific radio subframe in a specific radio frame.

The second parameter is a parameter related to the beam coverage direction. A difference from the first parameter lies in that the beam coverage direction corresponding to the second parameter is different from the beam coverage direction corresponding to the first parameter. Optionally, the second parameter is an original parameter used before the first parameter takes effect, and the beam coverage direction corresponding to the second parameter is an original beam coverage direction before the first parameter takes effect.

For example, an original downtilt angle of an antenna is k°. When interference is detected, the downtilt angle is adjusted from k° to m°. When a specified sequence for detecting interference needs to be sent, the downtilt angle is adjusted from m° back to k°. In this example, the first parameter is a downtilt angle m°, and the second parameter is a downtilt angle k°.

Optionally, the second parameter includes a downtilt angle, and the second message includes a value of the downtilt angle or a variation of the downtilt angle.

Optionally, the second parameter includes a beamforming matrix, and the second message includes a value of the beamforming matrix or an index of the beamforming matrix.

Optionally, the second message includes second time information, and the second time information indicates a time point at which the second parameter starts to take effect. For example, the second time information includes a frame number and/or a subframe number from which the second parameter starts to take effect.

Optionally, the second message includes second duration information, and the second duration information indicates continuous effective duration of the second parameter.

Optionally, the second message is a CPRI message or an eCPRI message.

According to the method provided in this embodiment, considering that an interference signal may not be continuously received after the beam coverage direction is adjusted, the original beam coverage direction is restored when the specified sequence is sent, to help the baseband unit continuously perform interference detection based on the specified sequence.

The foregoing focuses on a difference between the second message and the first message, and a difference between the second parameter and the first parameter. Mutual reference may be made to same or similar features of the second message and the first message, and mutual reference may be made to same or similar features of the second parameter and the first parameter.

The scenario 2: When strength of interference received by a base station decreases or an interference direction changes, the baseband unit indicates the radio frequency unit to restore the beam coverage direction to an original beam coverage direction.

A communication procedure between the baseband unit and the radio frequency unit in the scenario 2 is similar to that in the method shown in FIG. 3. A difference lies in that a value of the first parameter in the method shown in FIG. 3 is replaced with a historically used parameter value from a value of an interference avoidance direction, so that the beam coverage direction is restored to the original beam coverage direction.

Optionally, if the specified time and sending time of a calibration sequence are in a same time period, the baseband unit generates a third message. The third message indicates the radio frequency unit to stop sending the calibration sequence. The baseband unit sends the third message to the radio frequency unit. The radio frequency unit receives the third message, and stops sending the calibration sequence based on the third message.

The specified time and the sending time of the calibration sequence are in a same time period. For example, the specified sequence and the calibration sequence are sent by using a same radio frame.

Considering that the specified sequence used for interference detection and the calibration sequence used for channel calibration may conflict in time domain, for example, the specified sequence and the calibration sequence are sent by using a same radio frame, it is difficult for a receive end to correctly receive the specified sequence and the calibration sequence. In the foregoing implementation, sending time of the specified sequence and the sending time of the calibration sequence need to be staggered, to improve a success rate of transmitting the specified sequence and the calibration sequence.

Optionally, the baseband unit further indicates the radio frequency unit to resend the calibration sequence after effective time of a parameter of a beam coverage direction corresponding to the specified sequence ends. For example, the third message further indicates the radio frequency unit to resend the calibration sequence after effective time of the second parameter ends. After the radio frequency unit receives the third message, the radio frequency unit resends the calibration sequence based on the third message after the effective time of the second parameter ends.

Optionally, the baseband unit indicates a sending time point of the calibration sequence. For example, the third message includes third time information, and the third time information indicates a time point at which the calibration sequence is sent. After the radio frequency unit receives the third message, the radio frequency unit sends the calibration sequence at the time point indicated by the third time information.

Optionally, the third message includes an enablement identifier, and the enablement identifier is used to identify sending of the calibration sequence or termination of sending the calibration sequence. After the radio frequency unit receives the third message, the radio frequency unit obtains the enablement identifier from the third message. If the enablement identifier is used to identify sending the calibration sequence, the radio frequency unit sends the calibration sequence. If the enablement identifier is used to identify stopping sending the calibration sequence, the radio frequency unit stops sending the calibration sequence.

With reference to a specific application scenario and some specific instances, the following describes the foregoing method embodiment by using an example.

In the following specific instance, a BBU is the baseband unit in the method shown in FIG. 3. An RRU or an AAU is the radio frequency unit in the method shown in FIG. 3. A downtilt angle/beam coverage matrix is the first parameter in the method shown in FIG. 3.

The following specific instances are applied to a scenario of avoiding atmospheric duct interference. It is a common phenomenon that long-distance inter-cell interference in a TDD system is caused by an atmospheric duct phenomenon. In addition, an occurrence date, occurrence time, and duration of the inter-cell interference are uncertain with change of weather.

When a coverage direction or downtilt angle of a cell is adjusted, only mutual interference between local cells is considered, which is determined during initial site deployment. Alternatively, if cell performance is poor for a long time after site deployment, the downtilt angle is manually reconfigured to improve the cell performance. When a cell is subject to atmospheric duct interference, performance deteriorates significantly, which severely affects user experience.

In view of this, the following instance provides a method for quickly and automatically adjusting the coverage direction of the cell in real time. In this method, the BBU starts, based on a monitored remote interference status, determining on adjustment of the downtilt angle/beam coverage direction. The BBU adjusts the downtilt angle or beam coverage direction of the cell based on the decision. To meet special requirements of some signals, this method supports in quickly returning to and re-adjusting the downtilt angle or the beam coverage direction. The BBU determines adjustment time and an adjustment amount based on requirements of service signals, and sends the adjustment time and the adjustment amount to the RRU in real time for quick adjustment.

The BBU is configured to perform the following steps (1) to (6).

In step (1), the BBU performs uplink interference measurement based on an uplink signal received from the RRU. If it is detected that a base station is interfered by a neighboring base station or a remote base station in an uplink slot, the BBU enters a downtilt angle or beam coverage direction adjustment procedure: decreasing or increasing a downtilt angle, or adjusting a beam coverage direction.

A manner of determining the downtilt angle or the beam coverage direction includes the following manner (1. 1) and manner (1.2).

Manner (1.1) progressive approach: which is a step by step method.

Manner (1.2): The BBU adjusts the downtilt angle/beam coverage direction based on an interference direction obtained through the uplink measurement (interference strength is measured in each beam direction based on beamforming), to avoid the interference direction.

In step (2), the BBU adjusts downtilt angles or beam coverage directions of a downlink slot and an uplink slot through a fronthaul interface. Involved information elements include an effective frame number, a subframe number, a value of a delta downtilt angle or a value of a downtilt angle, and an index of a beamforming matrix or a specific beamforming matrix.

In step (3), to ensure continuous interference detection, the BBU indicates, through the fronthaul interface, the RRU to send a specified special sequence at specific locations of a specific radio frame number and subframe number. In addition, the BBU indicates the RRU to use an original downtilt angle at this moment and continuous effective duration of the downtilt angle.

Involved information elements include: an effective frame number, a subframe number, a value of a delta downtilt angle or a value of a downtilt angle, an index of a beamforming matrix or a specific beamforming matrix, and effective duration.

Step (3) may be replaced with step (3.1).

Alternatively, in step (3.1), the BBU may indicate only a latest downtilt angle to be used by the RRU, and in comparison with the information elements in step (3), information elements in step (3.1) do not include effective duration.

In step (4), if a channel calibration sequence is also sent in a radio frame, the BBU indicates the RRU to stop sending the channel calibration sequence through the fronthaul interface in real time. After an effective moment of a downtilt angle of the special sequence ends, the BBU sends the calibration sequence. Involved information elements include a frame number, a subframe number, and a calibration sequence of sending enablement/disablement.

Step (4) may be replaced with step (4.1).

Step (4.1) corresponds to step (3.1), and the BBU may alternatively indicate a sending moment of the calibration sequence individually.

Step (5) corresponds to step (3.1). After the special sequence is sent, the BBU indicates the RRU to use a new downtilt angle. Involved information elements are the same as those in step (3).

In step (6), the BBU continuously monitors interference to the base station based on the uplink signal and the special sequence. If the interference decreases or an interference direction changes, the BBU indicates the AAU to gradually adjust the downtilt angle or beam coverage direction until an original coverage direction is restored.

If the interference is still strong, the BBU continues to decrease the downtilt angle or beam coverage direction until the downtilt angle is adjusted to a preset maximum value (basic coverage of the cell needs to be ensured). Involved information elements are the same as those in step (2).

Transmission of the foregoing various information elements in a fronthaul network includes but is not limited to the following implementation 1 and implementation 2.

Implementation 1: Through a data plane interface, the BBU transfers the downtilt angle, beam coverage direction, effective frame number, subframe number, and effective duration to the RRU at a TTI-level granularity. To ensure that the RRU has time to adjust, the BBU notifies the RRU xx milliseconds in advance.

Implementation 2: Through a control plane interface, the BBU transfers a corresponding information element to the RRU before an effective moment. Compared with that in the data plane interface, the BBU notifies the RRU xx milliseconds plus transmission duration of the control plane interface in advance.

The RRU adjusts the downtilt angle or beam coverage direction in a corresponding frame number and subframe number based on indication of the BBU and specified effective duration.

### Instance 1

For a type of RRU that does not support three-dimensional beamforming, the BBU performs the following steps.

In step (1), the BBU performs uplink interference measurement based on an uplink signal received from the RRU. If it is detected that a base station is interfered by a neighboring base station or a remote base station in an uplink slot, the BBU enters a downtilt angle adjustment procedure: decreasing or increasing a downtilt angle.

The downtilt angle can be determined step by step, namely, in a progressive approach.

In step (2), the BBU adjusts downtilt angles of a downlink slot and uplink slot through a fronthaul interface. Involved information elements include an effective frame number, a subframe number, and a value of a delta downtilt angle or a value of a downtilt angle.

In step (3), to ensure continuous interference detection, the BBU indicates, through the fronthaul interface, the RRU to send a specified special sequence at specific locations of a specific radio frame number and subframe number. In addition, the BBU indicates the RRU to use an original downtilt angle at this moment and continuous effective duration of the downtilt angle.

Involved information elements include: an effective frame number, a subframe number, a value of a delta downtilt angle or a value of a downtilt angle, and effective duration.

Step (3) may be replaced with step (3.1).

Alternatively, in step (3.1), the BBU may indicate only a latest downtilt angle to be used by the RRU, and in comparison with the information elements in step (3), information elements in step (3.1) do not include effective duration.

In step (4), if a channel calibration sequence is also sent in a radio frame, the BBU indicates the RRU to stop sending the channel calibration sequence through the fronthaul interface in real time. After an effective moment of a downtilt angle of the special sequence ends, the BBU sends the calibration sequence. Involved information elements include a frame number, a subframe number, and a calibration sequence of sending enablement/disablement.

Step (4) may be replaced with step (4.1).

Step (4.1) corresponds to step (3.1), and the BBU may alternatively indicate a sending moment of the calibration sequence individually.

Step (5) corresponds to step (3.1). After the special sequence is sent, the BBU indicates the RRU to use a new downtilt angle. Involved information elements are the same as those in step (3.1).

In step (6), the BBU continuously monitors interference to the base station based on the uplink signal and the special sequence. If the interference decreases or an interference direction changes, the BBU indicates the AAU to gradually adjust the downtilt angle until the downtilt angle is restored to an original value.

If the interference is still strong, the BBU continues to decrease the downtilt angle until the downtilt angle is adjusted to a preset maximum downtilt angle (basic coverage of a cell need to be ensured). Involved information elements are the same as those in step (2).

Transmission of the foregoing various information elements in a fronthaul network includes but is not limited to the following implementation 1 and implementation 2.

Implementation 1: Through a data plane interface, the BBU transfers the downtilt angle, effective frame number, subframe number, and effective duration to the RRU based on a TTI-level granularity. To ensure that the RRU has time to adjust, the BBU notifies the RRU xx milliseconds in advance.

Implementation 2: Through a control plane interface, the BBU transfers a corresponding information element to the RRU before an effective moment of an adjusted downtilt angle. Compared with that in the data plane interface, the BBU notifies the RRU xx milliseconds plus transmission duration of the control plane interface in advance.

The RRU adjusts the downtilt angle in a corresponding frame number and subframe number based on indication of the BBU and specified effective duration.

Beneficial effects brought by the method described in the foregoing instance 1 include but are not limited to: The BBU collects a service status and an interference feature in real time, quickly determines a downtilt angle adjustment manner, and transmits the downtilt angle adjustment manner to the RRU in real time through the fronthaul interface, to implement adaptive and fast adjustment. In addition, different adjustment strategies are used for different signals to meet different service requirements. In this embodiment, dynamic interference is effectively avoided by adjusting the downtilt angle quickly and adaptively in real time.

### Instance 2

For a type of RRU/AAU that supports three-dimensional beamforming, in addition to the technical solution in the instance 1, the BBU may also use a technical solution in this embodiment. In the instance 2, the BBU performs the following steps.

In step (1), the BBU performs uplink interference measurement based on an uplink signal received from the RRU or the AAU. If it is detected that a base station is interfered by a neighboring base station or a remote base station in an uplink slot, the BBU enters a beam coverage direction adjustment procedure: selecting a new coverage type based on an interference direction.

A selection manner of the new coverage type is as follows: Based on beamforming, interference strength in each beam direction is measured. For a direction with strong interference strength, energy of a beam in the direction is set to 0, so that the RRU or AAU avoids the interference direction during transmission or reception.

In step (2), the BBU adjusts beam coverage directions of a downlink slot and an uplink slot through a fronthaul interface. Involved information elements include an effective frame number, a subframe number, a beamforming matrix, or an index value of the beamforming matrix.

In step (3), to ensure continuous interference detection, the BBU indicates, through the fronthaul interface, the RRU to send a specified special sequence at specific locations of a specific radio frame number and subframe number. In addition, the BBU indicates the RRU to use an original beamforming matrix at this moment and continuous effective duration of the original beamforming matrix.

Involved information elements include an effective frame number, a subframe number, a beamforming matrix or an index value of the beamforming matrix, and effective duration.

Step (3) may be replaced with step (3.1).

Alternatively, in step (3.1), the BBU may indicate only a latest beamforming matrix to be used by the RRU, and in comparison with the information elements in step (3), information elements in step (3.1) do not include effective duration.

In step (4), if a channel calibration sequence is also sent in a radio frame, the BBU indicates the RRU to stop sending the channel calibration sequence through the fronthaul interface in real time. After an effective moment of a beamforming matrix of the special sequence ends, the BBU sends the calibration sequence. Involved information elements include a frame number, a subframe number, and a calibration sequence of sending enablement/disablement.

Step (4) may be replaced with step (4.1).

Step (4.1) corresponds to step (3.1), and the BBU may alternatively indicate a sending moment of the calibration sequence individually.

Step (5) corresponds to step (3.1). After the special sequence is sent, the BBU indicates the RRU to use a new beamforming matrix. Involved information elements are the same as those in step (3.1).

In step (6), the BBU continuously monitors interference to the base station based on the uplink signal and the special sequence. If the interference decreases or an interference direction changes, the BBU indicates the AAU to gradually adjust the beamforming matrix until an original coverage direction is restored.

If the interference is still strong, the BBU continues to calculate the beamforming matrix until a preset minimum coverage range is reached (basic coverage of a cell need to be ensured). Involved information elements are the same as those in step (2).

Transmission of the foregoing various information elements in a fronthaul network includes but is not limited to the following implementation 1 and implementation 2.

Implementation 1: Through a data plane interface, the BBU transfers a beam coverage direction, an effective frame number, a subframe number, and effective duration to the RRU based on a TTI-level granularity. To ensure that the RRU has time to adjust, the BBU notifies the RRU xx milliseconds in advance.

Implementation 2: Through a control plane interface, the BBU transfers a corresponding information element to the RRU before an effective moment of an adjusted beamforming matrix. Compared with that in the data plane interface, the BBU notifies the RRU xx milliseconds plus transmission duration of the control plane interface in advance.

The RRU adjusts the beamforming matrix in a corresponding frame number and subframe number based on indication of the BBU and specified effective duration, to adjust a coverage direction.

Beneficial effects brought by the method described in the foregoing instance 2 include but are not limited to: The BBU collects a service status and an interference feature in real time, quickly determines a beam coverage adjustment manner, and transmits the beam coverage adjustment manner to the RRU in real time through the fronthaul interface, to implement adaptive and fast adjustment. In addition, different adjustment strategies are used for different signals to meet different service requirements. In this embodiment, dynamic interference is effectively avoided by adjusting beam coverage quickly and adaptively in real time.

It can be learned from the foregoing embodiments that, in some embodiments of this application, a downtilt angle/beam coverage of a cell is determined in real time based on a real-time interference status. Different downtilt angles/beam coverage are/is used for different signal decisions. For a same signal, different downtilt angles/beam coverage are/is used at different time points.

It can be learned from the foregoing embodiments that beneficial effects brought by embodiments of this application include but are not limited to: The BBU determines, in real time, the downtilt angle/beam coverage of the cell with reference to remote interference information, uses different downtilt angles/beam coverage for different signals, and transmits the downtilt angles/beam coverage to the RRU in real time through the fronthaul interface, to quickly adjust the downtilt angle/beam coverage, avoid interference, and improve service performance of the cell.

Regarding a technical principle for achieving the effect of improving service performance, if transmit slots of services are reduced or adjusted to avoid interference, the service performance of the cell is affected; and if the downtilt angle is manually adjusted, a downtilt angle adjustment speed is too slow, and impact of remote interference cannot be avoided in time. However, in some embodiments of this application, an interference condition is automatically monitored in real time, and the coverage direction of the cell is adaptively adjusted, so that a radio air interface resource is used to a maximum extent without sacrificing a time domain resource and a frequency domain resource of a radio air interface. In addition, a direction is adjusted only in a case of interference, to adapt to the interference condition in real time. This reduces performance losses caused when manual adjustment is not timely, and significantly improves service performance.

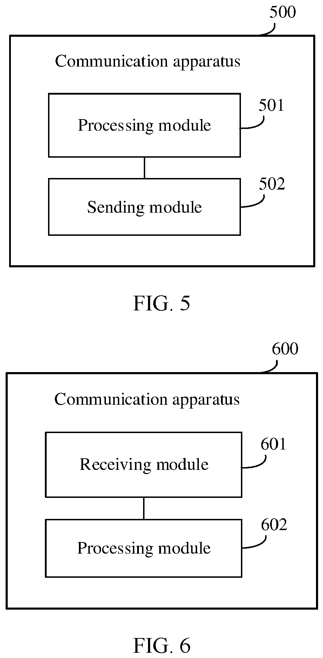

FIG. 5 is a schematic of a structure of a communication apparatus 500 according to an embodiment of this application. The communication apparatus 500 includes a processing module 501 and a sending module 502.

Optionally, with reference to FIG. 1, the communication apparatus 500 shown in FIG. 5 is disposed in an eREC in FIG. 1.

Optionally, with reference to FIG. 2, the communication apparatus 500 shown in FIG. 5 is disposed in the baseband unit 21 in FIG. 2.

Optionally, with reference to FIG. 3, the communication apparatus 500 shown in FIG. 5 is disposed in the baseband unit in FIG. 3. The processing module 501 is configured to support the communication apparatus 500 in performing S301 and S302. The sending module 502 is configured to support the communication apparatus 500 in performing S303.

The apparatus embodiment described in FIG. 5 is merely an example. For example, division into the modules is merely logical function division and may be other division in actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module.

All or some of the modules in the communication apparatus 500 are implemented by using software, hardware, firmware, or any combination thereof.

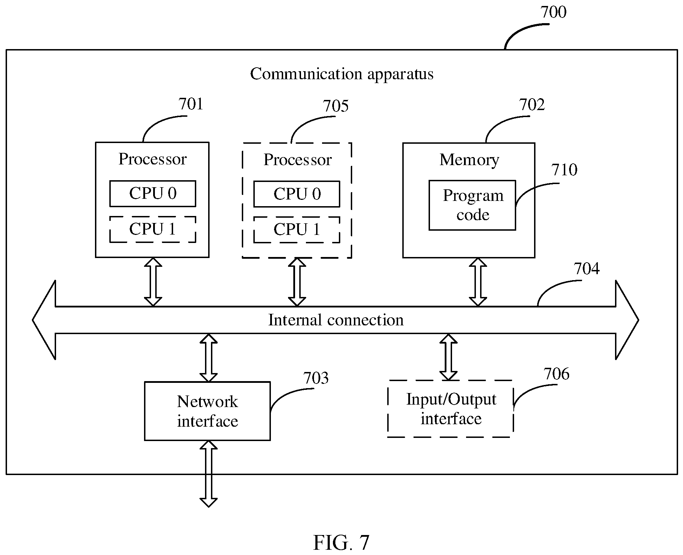

When software is used for implementation, for example, the processing module 501 is implemented by a software functional module generated after at least one processor 701 in FIG. 7 reads program code stored in a memory 702.

When hardware is used for implementation, for example, the foregoing modules in FIG. 5 are respectively implemented by different hardware. For example, the processing module 501 is implemented by some processing resources (for example, one core or two cores in a multi-core processor) in the at least one processor 701 in FIG. 7, or is implemented by a programmable device like a field programmable gate array (field programmable gate array, FPGA) or a coprocessor. The sending module 502 is implemented by a network interface 703 in FIG. 7.

FIG. 6 is a schematic of a structure of a communication apparatus 600 according to an embodiment of this application. The communication apparatus 600 includes a receiving module 601 and a processing module 602.

Optionally, with reference to FIG. 1, the communication apparatus 600 shown in FIG. 6 is disposed in an eRE in FIG. 1.

Optionally, with reference to FIG. 2, the communication apparatus 600 shown in FIG. 6 is disposed in the radio frequency unit 22 in FIG. 2.

Optionally, with reference to FIG. 3, the communication apparatus 600 shown in FIG. 6 is disposed in the radio frequency unit in FIG. 3. The receiving module 601 is configured to support the communication apparatus 600 in performing S304. The processing module 602 is configured to support the communication apparatus 600 in performing S305.

The apparatus embodiment described in FIG. 6 is merely an example. For example, division into the modules is merely logical function division and may be other division in actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module.

All or some of the modules in the communication apparatus 600 are implemented by using software, hardware, firmware, or any combination thereof.

When software is used for implementation, for example, the processing module 602 is implemented by a software functional module generated after at least one processor 701 in FIG. 7 reads program code stored in a memory 702.

When hardware is used for implementation, for example, the foregoing modules in FIG. 6 are respectively implemented by different hardware. For example, the processing module 602 is implemented by some processing resources (for example, one core or two cores in a multi-core processor) in the at least one processor 701 in FIG. 7, or is implemented by a programmable device like a field programmable gate array (field programmable gate array, FPGA) or a coprocessor. The receiving module 601 is implemented by a network interface 703 in FIG. 7.

FIG. 7 is a schematic of a structure of a communication apparatus according to an embodiment of this application. The communication apparatus 700 includes at least one processor 701, a memory 702, and at least one network interface 703.

Optionally, with reference to FIG. 1, the communication apparatus 700 shown in FIG. 7 is an eREC or an eRE in FIG. 1.

Optionally, with reference to FIG. 2, the communication apparatus 700 shown in FIG. 7 is disposed in the baseband unit 21 or the radio frequency unit 22 in FIG. 2.

Optionally, with reference to FIG. 3, the communication apparatus 700 shown in FIG. 7 is the baseband unit in FIG. 3. The processor 701 is configured to support the communication apparatus 700 in performing S301 and S302. The network interface 703 is configured to support the communication apparatus 700 in performing S303. Alternatively, the communication apparatus 700 shown in FIG. 7 is the radio frequency unit in FIG. 3. The receiving module 601 is configured to support the communication apparatus 600 in performing S304. The processing module 602 is configured to support the communication apparatus 600 in performing S305.

The processor 701 is, for example, a general-purpose central processing unit (central processing unit, CPU), a network processor (network processor, NP), a graphics processing unit (graphics processing unit, GPU), a neural network processing unit (neural network processing unit, NPU), a data processing unit (data processing unit, DPU), a microprocessor, or one or more integrated circuits configured to implement the solutions of this application. For example, the processor 701 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable gate array (field programmable gate array, FPGA), a generic array logic (generic array logic, GAL), or any combination thereof.

The memory 702 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, and the like), a magnetic disk storage medium or another magnetic storage device, or any other medium that can be used to include or store expected program code in a form of instructions or a data structure and that is accessible by a computer, but is not limited thereto. Optionally, the memory 702 exists independently, and is connected to the processor 701 through an internal connection 704. Alternatively, the memory 702 and the processor 701 are integrated together.

The network interface 703 uses any apparatus of a transceiver type and is configured to communicate with another device or a communication network. The network interface 703 includes, for example, at least one of a wired network interface or a wireless network interface. The wired network interface is, for example, an Ethernet interface. The Ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 701 includes one or more CPUs, for example, a CPU 0 and a CPU 1 shown in FIG. 7.

Optionally, the processor 701 implements the method in the foregoing embodiment by reading program code stored in the memory 702, or the processor 701 implements the method in the foregoing embodiment by using program code stored internally. When the processor 701 implements the method in the foregoing embodiment by reading the program code stored in the memory 702, the memory 702 stores program code 710 for implementing the method provided in this embodiment of this application.

In some embodiments, the communication apparatus 700 optionally includes a plurality of processors, for example, the processor 701 and a processor 705 shown in FIG. 7. Each of these processors is, for example, a single-core processor (single-CPU) or a multi-core processor (multi-CPU). The processor optionally refers to one or more devices, circuits, and/or processing cores configured to process data (for example, computer program instructions).

In some embodiments, the communication apparatus 700 further includes the internal connection 704. The processor 701, the memory 702, and the at least one network interface 703 are connected through the internal connection 704. The internal connection 704 includes a channel for transmitting information between the foregoing components. Optionally, the internal connection 704 is a board or a bus. Optionally, the internal connection 704 includes an address bus, a data bus, a control bus, and the like.

In some embodiments, the communication apparatus 700 further includes an input/output interface 706. The input/output interface 706 is connected to the internal connection 704.

For more details of implementing the foregoing functions by the processor 701, refer to the descriptions in the foregoing method embodiments. Details are not described herein again.

In some embodiments, a computer-readable storage medium is provided. The storage medium stores at least one instruction. When the instruction is run on a computer, the computer is enabled to perform the method procedure performed by the baseband unit in the foregoing method embodiments.

In some embodiments, a computer-readable storage medium is provided. The storage medium stores at least one instruction. When the instruction is run on a computer, the computer is enabled to perform the method procedure performed by the radio frequency unit in the foregoing method embodiments.

In some embodiments, a computer program product is provided. The computer program product includes one or more computer program instructions. When the computer program instructions are loaded and run by a computer, the computer is enabled to perform the method procedure performed by the baseband unit in the foregoing method embodiments.

In some embodiments, a computer program product is provided. The computer program product includes one or more computer program instructions. When the computer program instructions are loaded and run by a computer, the computer is enabled to perform the method procedure performed by the radio frequency unit in the foregoing method embodiments.

In some embodiments, a chip is provided. The chip includes a programmable logic circuit and/or program instructions. When being run, the chip is configured to implement the method procedure performed by the baseband unit in the foregoing method embodiments.

According to a twelfth aspect, a chip is provided. The chip includes a programmable logic circuit and/or program instructions. When being run, the chip is configured to implement the method procedure performed by the radio frequency unit in the foregoing method embodiments.

It should be understood that, the term "and/or" used in this specification indicates and includes any or all possible combinations of one or more items in associated listed items. The term "and/or" describes an association relationship for describing associated objects and indicates that three relationships may exist. For example, A and/or B may indicate the following three cases: Only A exists, both A and B exist, and only B exists. In addition, the character "/" in this application generally indicates an "or" relationship between the associated objects.

Embodiments in this specification are described in a progressive manner. For same or similar parts in the embodiments, refer to each other. Each embodiment focuses on a difference from other embodiments.

Making reference to B for A means that A is the same as B or that A is a simple variant of B.

In the specification and claims in embodiments of this application, the terms "first", "second", and the like are for distinguishing between different objects, but are not intended to describe a specific order of the objects, and cannot be understood as an indication or implication of relative importance. For example, the first message and the second message are used to distinguish between different messages, but are not used to describe a specific sequence of messages, and cannot be understood as that the first message is more important than the second message.

In embodiments of this application, unless otherwise specified, "at least one" means one or more, and "a plurality of" means two or more.

All or some of the foregoing embodiments may be implemented by using software, hardware, firmware, or any combination thereof. When software is used for implementation, the implementation may be totally or partially implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An interference avoidance method, wherein the method comprises:
obtaining, by a baseband unit, a first parameter based on an interference detection result;
generating, by the baseband unit, a first message based on the first parameter, wherein the first message indicates a radio frequency unit to adjust a beam coverage direction based on the first parameter; and
sending, by the baseband unit, the first message to the radio frequency unit.

2. The method according to claim 1, wherein the first message comprises first time information, and the first time information indicates a time point at which the first parameter starts to take effect.

3. The method according to claim 2, wherein the first time information comprises a frame number and/or a subframe number from which the first parameter starts to take effect.

4. The method according to any one of claims 1 to 3, wherein the first message comprises first duration information, and the first duration information indicates continuous effective duration of the first parameter.

5. The method according to any one of claims 1 to 4, wherein the first message is a CPRI message or an eCPRI message.

6. The method according to claim 1, wherein the first parameter comprises a downtilt angle, and the first message comprises a value of the downtilt angle or a variation of the downtilt angle.

7. The method according to claim 1, wherein the first parameter comprises a beamforming matrix, and the first message comprises a value of the beamforming matrix or an index of the beamforming matrix.

8. The method according to any one of claims 1 to 7, wherein the obtaining, by a baseband unit, a first parameter based on an interference detection result comprises:
obtaining, by the baseband unit, the first parameter based on a historically used parameter value and a stepping value.

9. The method according to any one of claims 1 to 7, wherein the interference detection result comprises an interference direction, and the obtaining, by a baseband unit, a first parameter based on an interference detection result comprises:
obtaining, by the baseband unit, the first parameter based on the interference direction information, wherein a beam coverage direction corresponding to the first parameter avoids the interference direction.

10. The method according to claim 9, wherein that a beam coverage direction corresponding to the first parameter avoids the interference direction comprises:
energy of a beam pointing to the interference direction is 0; or
energy of a beam pointing to the interference direction is less than energy of a beam pointing to the interference direction in a historical time period.

11. The method according to any one of claims 1 to 10, wherein the generating, by the baseband unit, a first message based on the first parameter comprises:
generating, by the baseband unit, the first message based on the first parameter in response to the interference detection result indicating that atmospheric duct interference exists;
generating, by the baseband unit, the first message based on the first parameter in response to the interference detection result indicating that atmospheric duct interference disappears;
generating, by the baseband unit, the first message based on the first parameter in response to the interference detection result indicating that intensity of atmospheric duct interference decreases; or
generating, by the baseband unit, the first message based on the first parameter in response to the interference detection result indicating that a direction of atmospheric duct interference changes.

12. The method according to any one of claims 1 to 11, wherein the method further comprises:
generating, by the baseband unit, a second message, wherein the second message indicates the radio frequency unit to send a specified sequence at specified time based on a second parameter, the specified sequence is used by the baseband unit to perform interference detection, and a beam coverage direction corresponding to the second parameter is different from the beam coverage direction corresponding to the first parameter; and
sending, by the baseband unit, the second message to the radio frequency unit.

13. The method according to claim 12, wherein the second message comprises second time information, and the second time information indicates a time point at which the second parameter starts to take effect.

14. The method according to claim 12, wherein the second message comprises second duration information, and the second duration information indicates continuous effective duration of the second parameter.

15. The method according to claim 12, wherein the second parameter comprises a downtilt angle, and the first message comprises a value of the downtilt angle or a variation of the downtilt angle.

16. The method according to claim 12, wherein the second parameter comprises a beamforming matrix, and the second message comprises a value of the beamforming matrix or an index of the beamforming matrix.

17. The method according to any one of claims 12 to 16, wherein the method further comprises:
generating, by the baseband unit, a third message if the radio frequency unit sends a calibration sequence at the specified time, wherein the third message indicates the radio frequency unit to stop sending the calibration sequence, and the calibration sequence is used to calibrate a transmission channel of the radio frequency unit; and
sending, by the baseband unit, the third message to the radio frequency unit.

18. The method according to claim 17, wherein the third message further indicates the radio frequency unit to resend the calibration sequence after effective time of the second parameter ends; or
the third message comprises third time information, and the third time information indicates a time point at which the calibration sequence is sent.

19. The method according to claim 17 or 18, wherein the third message comprises an enablement identifier, and the enablement identifier is used to identify sending of the calibration sequence or termination of sending the calibration sequence.

20. An interference avoidance method, wherein the method comprises:
receiving, by a radio frequency unit, a first message from a baseband unit, wherein the first message indicates the radio frequency unit to adjust a beam coverage direction based on a first parameter; and
adjusting, by the radio frequency unit, the beam coverage direction based on the first message and the first parameter.

21. The method according to claim 20, wherein the adjusting, by the radio frequency unit, the beam coverage direction based on the first message and the first parameter comprises:
automatically adjusting, by the radio frequency unit, the beam coverage direction based on the first message and the first parameter.

22. A communication apparatus, comprising a unit configured to implement the method according to any one of claims 1 to 19.

23. A communication apparatus, comprising a processor, wherein the processor is coupled to a memory, and the processor is configured to implement the method according to any one of claims 1 to 19.

24. A communication apparatus comprising a unit configured to implement the method according to any one of claims 20 and 21.

25. A communication apparatus, comprising a processor, wherein the processor is coupled to a memory, and the processor is configured to implement the method according to any one of claims 20 and 21.

26. A communication system, wherein the system comprises the communication apparatus according to claim 22 or 23 and the communication apparatus according to claim 24 or 25.

27. A computer-readable storage medium, wherein the storage medium stores at least one instruction, and when the instruction is run on a computer, the computer is enabled to perform the method according to any one of claims 1 to 19 or claims 20 and 21.

28. A computer program product, wherein the computer program product comprises one or more computer program instructions, and when the computer program instructions are loaded and run by a computer, the computer is enabled to perform the method according to any one of claims 1 to 19 or claims 20 and 21.
